(19) Europäisches Patentamt
European Patent Office
Office européen des brevets

(11) **EP 2 732 828 B1**

(12) **EUROPÄISCHE PATENTSCHRIFT**

(45) Veröffentlichungstag und Bekanntmachung des Hinweises auf die Patenterteilung:
**05.04.2017 Patentblatt 2017/14**

(51) Int Cl.:
***A61L 2/04*** *(2006.01)* ***C02F 1/02*** *(2006.01)*

(21) Anmeldenummer: **13185796.3**

(22) Anmeldetag: **24.09.2013**

(54) **Reinigungsvorrichtung zum Reinigen und Erwärmen von Schmutzflüssigkeit**

Cleaning device for cleaning and heating of contaminated liquid

Dispositif de nettoyage pour le nettoyage et le chauffage d'un liquide sale

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.11.2012 DE 102012110989**

(43) Veröffentlichungstag der Anmeldung:
**21.05.2014 Patentblatt 2014/21**

(73) Patentinhaber: **Sadoune, Henri**
**81541 München (DE)**

(72) Erfinder: **Sadoune, Henri**
**81541 München (DE)**

(74) Vertreter: **Hannke, Christian**
**Hannke Bittner & Partner**
**Patent- und Rechtsanwälte mbB**
**Prüfeninger Straße 1**
**93049 Regensburg (DE)**

(56) Entgegenhaltungen:
**GB-A- 579 292      GB-A- 678 743**
**US-A1- 2012 118 799**

**Beschreibung**

Die Erfindung betrifft eine Reinigungsvorrichtung zum Erwärmen und Reinigen von Schmutzflüssigkeit sowie ein Verfahren zur Herstellung einer Reinflüssigkeit aus einer Schmutzflüssigkeit.

Die Reinigungsvorrichtung umfasst einen Erhitzungskessel zum Erhitzen der Schmutzflüssigkeit, zumindest ein Einlassventil zum Einfüllen der Schmutzflüssigkeit in einen Erhitzungsraum des Erhitzungskessels, zumindest ein Auslassventil zum Ausleiten der Schmutzflüssigkeit aus dem Erhitzungskessel und zumindest ein Gasüberdruckventil zum Ausleiten von sich im Erhitzungsraum befindlichem Gas, gemäß dem Oberbegriff des Patentanspruchs 1.

Gattungsgemäße Erwärmungs- und/oder Reinigungsvorrichtungen sind in einer Vielzahl bereits aus dem Stand der Technik bekannt. Dabei wird innerhalb des Erhitzungskessels die Schmutzflüssigkeit erwärmt und dadurch beispielsweise zum Kochen gebracht. Es kann jedoch eine nach dem Stand der Technik bekannte Erwärmung bisher jedoch nur über eine technisch komplizierte, elektronische Ansteuerung der Ventile durchgeführt werden. Eine derartige Ansteuerung ist jedoch fehleranfällig und teuer in Wartung und Anschaffung. Insbesondere in eher ländlichen Gebieten, beispielsweise in der dritten Welt, können jedoch solche nach dem Stand der Technik bekannte Vorrichtungen nicht ohne elektrischen Strom und eine intensive fachmännische Wartung auskommen.

Ein Wassersterilisator ist in der Druckschrift GB 678 743 A gezeigt.

Eine zu lösende Aufgabe besteht darin, eine besonders kostengünstige und wartungsarme Reinigungsvorrichtung zum Erwärmen und Reinigen von Schmutzflüssigkeit anzugeben, um die oben genannten Probleme zu vermeiden.

Um nun eine Reinigungsvorrichtung zum Erwärmen und Reinigen von Schmutzflüssigkeit anzugeben, welche besonders kostengünstig und wartungsarm ist, macht die vorliegende Erfindung unter anderem von der Idee Gebrauch innerhalb der Reinigungsvorrichtung zumindest eine Ventilsteuereinheit zum mechanischen Steuern der Ventile anzuordnen, wobei das Einlassventil, das Auslassventil und das Gasüberdruckventil über die Ventilsteuereinheit mechanisch derart miteinander in Eingriff stehen, dass im Betrieb des Erhitzungskessels, während eines Erwärmens der Schmutzflüssigkeit, bis zu einem durch die Ventilsteuereinheit vorgebbaren Grenzgasdruck, von zumindest einer Atmosphäre innerhalb des Erhitzungsraums, durch die Ventilsteuereinheit das Einlassventil in einer Offen-Stellung und das Auslassventil und das Gasüberdruckventil in jeweils einer Zu-Stellung betreibbar sind. Nach Überschreiten des Grenzgasdrucks ist das Einlassventil durch die Ventilsteuereinheit schließbar und das Auslassventil und das Gasüberdruckventil durch die Ventilsteuereinheit öffenbar. Bei einem zeitlich auf das Überschreiten folgenden Unterschreiten des Grenzgasdrucks ist das Auslassventil und das Gasüberdruckventil durch die Ventilsteuereinheit wieder schließbar und das Einlassventil wieder öffenbar, wobei die Ventile jeweils in einem Drehpunkt drehbar an für die Ventile vorgesehenen Öffnungen im Erhitzungskessel gelagert sind, die Ventilsteuereinheit mit einer ersten Stangenvorrichtung und einer zweiten Stangenvorrichtung gebildet ist, welche jeweils entlang einer Außenwandung des Erhitzungskessels geführt sind, und wobei die erste Stangenvorrichtung das Einlassventil mit dem Gasüberdruckventil mechanisch fest verbindet, die zweite Stangenvorrichtung das Gasüberdruckventil und das Auslassventil mechanisch fest miteinander verbindet.

Durch eine derartige Ventilsteuereinheit ist sichergestellt, dass während des Betriebes der Reinigungsvorrichtung ein innerhalb des Erhitzungsraumes befindlicher und/oder erzeugter Gasdruck um den vorgebbaren Grenzgasdruck pendelt. Steigt der Gasdruck im Erhitzungsraum nur langsam an, kann es ausreichen zur Druckverringerung nur das Gasüberdruckventil zu öffnen, während die beiden anderen Ventile geschlossen bleiben. Steigt der Gasdruck jedoch rapide und/oder schnell im Erhitzungsraum an, kann zusätzlich oder alleine das Auslassventil zur Druckentlastung geöffnet werden. Die Öffnung des Auslassventils bringt daher eine besonders schnelle Druckentlastung mit sich, da die Dichte des Schmutzwassers größer ist als die Dichte des Gasdampfs und somit beim Ausleiten des Schmutzwassers schneller als nur bei alleiniger Öffnung des Gasüberdruckventils eine Druckverringerung eintritt. Vorzugsweise weicht während des Betriebes der Reinigungsvorrichtung der gemessene Gasdruck um weniger als 10%, bevorzugt um weniger als 5%, von dem Grenzgasdruck ab. Somit ist sichergestellt, dass der Gasdruck und auch die Temperatur innerhalb des Erhitzungskessels möglichst konstant gehalten werden können. Vorzugsweise beträgt die Temperatur im Erhitzungskessel wenigstens 90°C und höchstens 120°C. Insbesondere kann der Grenzgasdruck genau eine Atmosphäre innerhalb des Erhitzungsraumes betragen.

Ein derartiger möglichst konstanter Gasdruck innerhalb des Erhitzungsraumes ist deshalb besonders wichtig, da beispielsweise bei dem Grenzgasdruck von einer Atmosphäre die Siedetemperatur einer Vielzahl von Flüssigkeiten gut bekannt ist. Zum Beispiel siedet Wasser bei einer Temperatur von etwa 100°C bei einem Gasdruck von einer Atmosphäre. Die vorliegende Erfindung beruht insbesondere auf der Erkenntnis, dass Schmutzwasser beispielsweise zu 99% aus Wasser und zu 1% aus Schmutz, zum Beispiel organische oder anorganische Verunreinigungen bestehen kann. Bei Schmutzwasser kann es sich auch beispielsweise um Salzwasser, handeln. In Fall ist Salz als der jeweilige Schmutz anzusehen.

Dabei ergibt sich der Verschmutzungsgrad (%) durch folgende Formel:

$$Verschmutzungsgrad\ (\%) = \frac{Verschmutzungsdichte\ \left[\frac{mg}{l}\right]}{Wasserdichte\ \left[\frac{mg}{l}\right]} \times 100$$

Ein derartiger Verschmutzungsgrad von beispielsweise 1% des Wassers legt daher nahe, das Wasser von einem derart geringen Verschmutzungsgrad zu befreien, so dass Schmutzwasser durch die Reinigungsvorrichtung nach dem Befreien von dem Schmutz wieder beispielsweise trinkbar gemacht werden kann. Eine derartige Reinigungsvorrichtung kann daher entscheidend dazu beitragen, Wassermangel in wasserarmen Gebieten der Erde zumindest zu lindern.

Der geringe Verschmutzungsgrad führt daher dazu, dass die Siedecharakteristik der Schmutzflüssigkeit, also beispielsweise des Schmutzwassers, derjenigen von beispielsweise reinem Wasser hochgradig ähnelt. Diese Tatsache lässt daher unmittelbar einen dahingehenden Rückschluss zu, dass, obwohl die Siedetemperatur der Schmutzflüssigkeit, im Vergleich zu reinem Wasser, zunächst nicht bekannt ist, aufgrund des geringen Verschmutzungsgrades der Schmutzflüssigkeit die eigentlich unbekannte Siedetemperatur im Vergleich zu beispielsweise reinem Wasser bis auf unwesentliche Abweichungen die Gleiche ist.

Mit anderen Worten kann daraus gefolgert werden, dass, sofern der Gasdruck innerhalb des Erhitzungsraumes bekannt und möglichst konstant ist, also beispielsweise eine Atmosphäre beträgt, unmittelbar ebenso durch die hochgradig ähnlichen Siedeeigenschaften der Schmutzflüssigkeit zu denjenigen von zum Beispiel Wasser ein Rückschluss dahingehend gezogen werden kann, ob auch die Schmutzflüssigkeit innerhalb des Erhitzungsraumes bereits siedet.

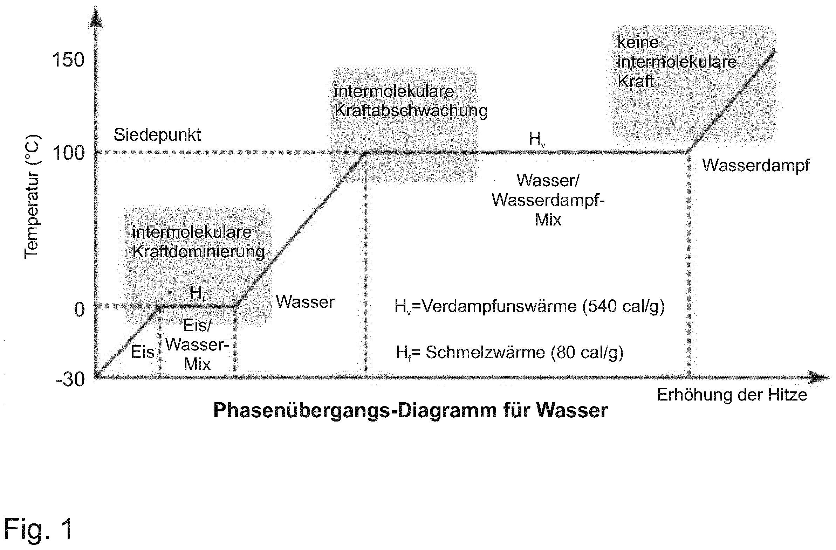

Zur Verdeutlichung des Verhaltens von Wasser während einer Erhitzung dient die Figur 1. Aus dieser Figur kann leicht erkannt werden, dass während des Siedeprozesses die Temperatur so lange konstant ist, bis noch nicht alles Wasser verdampft ist. Diese Tatsache ist entscheidend für das Design des Tanks und es ist zudem auch einer der Gründe, warum der Erhitzungskessel bei einem vorgebbaren Grenzgasdruck von beispielsweise einer Atmosphäre zu betreiben ist.

Gemäß zumindest einer Ausführungsform umfasst die Reinigungsvorrichtung einen Erhitzungskessel zum Erhitzen der Schmutzflüssigkeit. Bei dem Erhitzungskessel handelt es sich um einen Hohlkörper, welcher die Schmutzflüssigkeit aufnehmen kann. Vorzugsweise ist der Erhitzungskessel mit einem Material gebildet, welches bis zu einer Temperatur von zumindest 450°C, bevorzugt bis zu einer Temperatur von zumindest 500°C temperaturstabil ist. "Temperaturstabil" heißt in diesem Zusammenhang, dass das Material des Erhitzungskessels bei derartigen Temperaturen keine irreversiblen Materialschädigungen, also beispielsweise Materialbrüche, aufweist. Insbesondere kann der Erhitzungskessel mit einem Metall, zum Beispiel Aluminium, einem Nicht-Metall oder einem Glas gebildet sein. Bei der Schmutzflüssigkeit handelt es sich um eine Flüssigkeit, welche durch Fremdpartikel und/oder Fremdstoffe verschmutzt und damit verunreinigt sein kann. Handelt es sich bei der Schmutzflüssigkeit beispielsweise um Schmutzwasser, so kann es sich bei dem Schmutzwasser um Abwasser oder um unreines Trinkwasser handeln.

Gemäß zumindest einer Ausführungsform umfasst die Reinigungsvorrichtung zumindest ein Einlassventil zum Einfüllen der Schmutzflüssigkeit in einen Erhitzungsraum des Erhitzungskessels. Der Erhitzungsraum ist als ein Hohlraum innerhalb des Erhitzungskessels ausgebildet, welcher nach außen durch eine Kesselwand des Erhitzungskessels begrenzt ist. Das Einlassventil kann insbesondere in Form einer Klappe gebildet sein, welche öffenbar und schließbar, je nachdem ob Schmutzflüssigkeit in den Erhitzungsraum eingefüllt werden soll oder nicht, am Erhitzungskessel angeordnet ist.

Gemäß zumindest einer Ausführungsform umfasst die Reinigungsvorrichtung zumindest ein Auslassventil zum Ausleiten der Schmutzflüssigkeit aus dem Erhitzungskessel. Hierbei ist das Auslassventil öffenbar und schließbar an dem Erhitzungskessel angeordnet.

Vorzugsweise sind das Einlassventil und das Auslassventil im Betrieb der Reinigungsvorrichtung derart miteinander über die Ventilsteuereinheit verschaltet, dass höchstens eines der beiden Ventile geöffnet ist und das jeweils andere Ventil geschlossen ist.

Gemäß zumindest einer Ausführungsform umfasst die Reinigungsvorrichtung zumindest ein Gasüberdruckventil zum Ausleiten von sich im Erhitzungsraum befindlichem Gas. Wird in den Erhitzungskessel über das Einlassventil Schmutzflüssigkeit eingefüllt und diese erhitzt, bildet sich innerhalb des Erhitzungsraumes über der Schmutzflüssigkeit ein gasförmiger Dampf, welcher über das Gasüberdruckventil aus dem Erhitzungsraum abgelassen werden und damit aus dem Erhitzungsraum entweichen kann.

Erfindungsgemäß umfasst die Reinigungsvorrichtung zumindest eine Ventilsteuereinheit zum mechanischen Steuern der Ventile, wobei das Einlassventil, das Auslassventil und das Gasüberdruckventil über die Ventilsteuereinheit mechanisch derart miteinander in Eingriff stehen, dass im Betrieb des Erhitzungskessels während eines Erwärmens der Schmutzflüssigkeit bis zu einem durch die Ventilsteuereinheit vorgebbaren Grenzgasdruck von zumindest einer Atmosphäre innerhalb des Erhitzungsraumes, durch die Ventilsteuereinheit das Einlassventil in einer Offen-Stellung und das Auslassventil und das Gasüberdruckventil in jeweils einer Zu-Stellung betreibbar sind.

Dabei ist nach Überschreiten des Grenzgasdruckes das Einlassventil durch die Ventilsteuereinheit schließbar und das Auslassventil und das Gasüberdruckventil durch die Ventilsteuereinheit öffenbar und bei einem zeitlich auf das Überschreiten folgenden Unterschreiten des Grenzgasdruckes das Auslassventil und das Gasüberdruckventil durch die Ventilsteuereinheit wieder schließbar und das Einlassventil wieder öffenbar. "Mechanisches Steuern" heißt in diesem Zusammenhang, dass die Bewegung der Ventile ausschließlich über mechanische Elemente der Ventilsteuereinheit vollzogen wird. Dies heißt insbesondere, dass auf elektronische Schaltelemente zur Bewegung der Ventile verzichtet ist. Die Ventilsteuereinheit ist daher frei von elektrischen Komponenten. Insbesondere ist auf eine elektrische Steuerung der Ventile vollständig verzichtet. Darüber hinaus kann die Reinigungsvorrichtung jedoch zusätzlich Drucksensoren und elektrische und/oder pneumatische Motoren aufweisen. Derartige Elemente greifen jedoch nicht in die Ventilsteuerung ein.

Gemäß zumindest einer Ausführungsform umfasst die Reinigungsvorrichtung zum Reinigen und Erwärmen von Schmutzflüssigkeit einen Erhitzungskessel zum Erhitzen der Schmutzflüssigkeit, zumindest ein Einlassventil zum Einfüllen der Schmutzflüssigkeit in einen Erhitzungsraum des Erhitzungskessels, zumindest ein Auslassventil zum Ausleiten der Schmutzflüssigkeit aus dem Erhitzungskessel, sowie zumindest ein Gasüberdruckventil zum Ausleiten von sich im Erhitzungsraum befindlichem Gas. Darüber hinaus umfasst die Reinigungsvorrichtung zumindest eine Ventilsteuereinheit zum mechanischen Steuern der Ventile, wobei das Einlassventil, das Auslassventil und das Gasüberdruckventil über die Ventilsteuereinheit mechanisch derart miteinander in Eingriff stehen, dass im Betrieb des Erhitzungskessels, während eines Erwärmens der Schmutzflüssigkeit, bis zu einem durch die Ventilsteuereinheit vorgebbaren Grenzgasdruck, von zumindest einer Atmosphäre innerhalb des Erhitzungsraums, durch die Ventilsteuereinheit das Einlassventil in einer Offen-Stellung und das Auslassventil und das Gasüberdruckventil in jeweils einer Zu-Stellung betreibbar sind. Nach Überschreiten des Grenzgasdrucks ist das Einlassventil durch die Ventilsteuereinheit schließbar und das Auslassventil und das Gasüberdruckventil durch die Ventilsteuereinheit öffenbar. Bei einem zeitlich auf das Überschreiten folgenden Unterschreiten des Grenzgasdrucks ist das Auslassventil und das Gasüberdruckventil durch die Ventilsteuereinheit wieder schließbar und das Einlassventil wieder öffenbar.

Erfindungsgemäß sind die Ventile jeweils in einem Drehpunkt drehbar an für die Ventile vorgesehenen Öffnungen im Erhitzungskessel gelagert. Die Ventilsteuereinheit ist mit einer ersten Stangenvorrichtung und einer zweiten Stangenvorrichtung gebildet, welche jeweils entlang einer Außenwandung des Erhitzungskessels geführt sind. Die erste Stangenvorrichtung verbindet das Einlassventil mit dem Gasüberdruckventil mechanisch fest, wobei die zweite Stangenvorrichtung das Gasüberdruckventil und das Auslassventil mechanisch fest miteinander verbindet. Über die Stangenvorrichtungen stehen daher die Ventile jeweils mechanisch miteinander in Eingriff. Eine Verschiebung beispielsweise der ersten Stangenvorrichtung bewirkt zum einen eine Öffnung des Einlassventils und gleichzeitig eine Schließung des Gasüberdruckventils und umgekehrt. Insofern können das Gasüberdruckventil und das Einlassventil mechanisch miteinander verrastet sein. Zudem kann die erste Stangenvorrichtung derart eingerichtet sein, dass in keiner Stellung der ersten Stangenvorrichtung sowohl das Einlassventil als auch das Gasüberdruckventil geöffnet sind. Auch das Gasüberdruckventil und das Auslassventil können jeweils derart über die zweite Stangenvorrichtung mechanisch miteinander in Eingriff stehen und/oder verrastet sein, dass bei einer Bewegung der Stangenvorrichtung entweder das Gasüberdruckventil und das Auslassventil gemeinsam geschlossen werden oder beide Ventile geöffnet werden. Eine derartige Anordnung und Konfiguration der Ventilsteuereinheit, gebildet durch die beiden Stangenvorrichtungen, führt daher zu einer besonders einfachen mechanischen Verschaltung der Ventile, ohne dass dabei zur Bewegungsabstimmung der jeweiligen Ventile aufeinander abgestimmte elektronische und/oder pneumatische Elemente Verwendung finden.

Gemäß zumindest einer Ausführungsform ist die zweite Stangenvorrichtung drehbar um einen Drehpunkt an einer Drehhalterung angeordnet, wobei ein erstes Hebelende der zweiten Stangenvorrichtung mit einem ersten Hebelende des Gasüberdruckventils und ein zweites Hebelende der zweiten Stangenvorrichtung mit einem zweiten Hebelende des Auslassventils mechanisch fest verbunden ist, wobei durch eine Hebelbewegung der zweiten Stangenvorrichtung sowohl das Gasüberdruckventil als auch das Auslassventil öffenbar sind. Über eine derartige Drehhalterung ist ein mechanischer Drehmechanismus realisiert, welcher bis auf in die Drehhalterung integrierte Drehscharniere keine weiteren mechanisch bewegbaren Teile benötigt, wodurch eine mechanische Verrastung des Gasüberdruckventils mit dem Auslassventil besonders einfach, kompakt und betriebsstabil realisiert ist.

Gemäß zumindest einer Ausführungsform ist die erste Stangenvorrichtung an einem dem ersten Hebelende des Gasüberdruckventils gegenüberliegenden zweiten Hebelende des Gasüberdruckventils mit diesem mechanisch fest verbunden. Ist das Gasüberdruckventil beispielsweise in Form einer schließbaren Klappe realisiert, sind vorzugsweise die beiden Stangenvorrichtungen an jeweils sich gegenüberliegenden Enden des Gasüberdruckventils an diesem befestigt. Aufgrund der Tatsache, dass das Gasüberdruckventil einen Hebelpunkt aufweist, der zwischen diesen Enden des Gasüberdruckventils angeordnet ist, wirkt das Gasüberdruckventil als ein mechanischer Hebel. Dies führt dazu, dass die beiden Stangenvorrichtungen über das Gasüberdruckventil miteinander in Eingriff stehen.

Gemäß zumindest einer Ausführungsform ist ein optisches Erhitzungssystem zum Erhitzen der Schmutzflüssigkeit im Erhitzungsraum vorgesehen, wobei über das optische Erhitzungssystem elektromagnetische Strahlung vorgebbar auf den Erhitzungskessel richtbar ist. "Optisches" Erhitzungssystem heißt in diesem Zusammenhang, dass dieses Erhitzungssystem mittels optischer Elemente und zumindest einer Strahlungsquelle, welche elektromagnetische Strahlung emittiert, gebildet ist. Dazu lenkt im Betrieb der Reinigungsvorrichtung das optische Erhitzungssystem elektromagnetische Strahlung direkt oder indirekt auf den Erhitzungskessel, wodurch beispielsweise aufgrund der wärmeleitenden Eigenschaften des Materials des Erhitzungskessels ebenso die Schmutzflüssigkeit innerhalb des Erhitzungskessels erwärmt wird. Ein derartiges optisches Erhitzungssystem stellt eine besonders einfache und kostengünstige Lösung der Erwärmung dar, durch welche gleichzeitig ein Energietransfer und eine Energieübertragung von dem optischen Erhitzungssystem auf den Erhitzungskessel besonders energieeffizient, das heißt verlustfrei, ist.

Gemäß zumindest einer Ausführungsform ist die von dem optischen Erhitzungssystem emittierbare elektromagnetische Strahlung über zumindest einen strahlungsdurchlässigen Durchlassbereich, welcher in eine Kesselwand des Erhitzungskessels eingebracht ist, in den Erhitzungsraum einleitbar. "Strahlungsdurchlässig" heißt in diesem Zusammenhang, dass der Durchlassbereich zumindest zu 80%, bevorzugt zu mehr als 90% durchlässig für auf ihn auftreffende elektronische Strahlung ist. Insbesondere kann der Durchlassbereich mit einem strahlungsdurchsichtigen Glas gebildet sein, welches in eine Öffnung der Kesselwand des Erhitzungskessels angeordnet und darin eingesetzt ist. Ist nun der Erhitzungskessel beispielsweise mit einem strahlungsundurchlässigen Material gebildet, kann über den Durchlassbereich besonders effizient und zielgerichtet elektromagnetische Strahlung zum Erhitzen der Schmutzflüssigkeit direkt in den Erhitzungsraum eingeleitet werden.

Gemäß zumindest einer Ausführungsform umfasst das optische Erhitzungssystem zumindest einen strahlungsreflektierenden Spiegel, welcher innerhalb des Erhitzungsraumes an einer Innenwandung des Erhitzungskessels angeordnet ist. Vorzugsweise ist der Spiegel derart angeordnet und/oder ausgestaltet, dass nach Auftreffen der in den Erhitzungsraum eingeleiteten elektromagnetischen Strahlung diese durch den Spiegel auf weitere Stellen, welche sich vom Durchlassbereich unterscheiden, der Innenwandung zumindest teilweise zurückreflektiert wird. Insbesondere können sich durch den einen oder die mehreren Spiegel innerhalb des Erhitzungsraumes Brennpunkte oder Punkte besonders hoher Energie-und/oder Wärmekonzentration bilden. Alternativ dazu können die Spiegel derart ausgestaltet sein, dass über den Durchlassbereich eingeleitete elektromagnetische Strahlung besonders homogen und gleichmäßig innerhalb des Erhitzungsraumes verteilt wird, so dass das Schmutzwasser gleichmäßig erwärmt werden kann.

Gemäß zumindest einer Ausführungsform ist in einer Hauptabstrahlrichtung des optischen Erhitzungssystems zwischen dem optischen Erhitzungssystem und dem Erhitzungskessel zumindest ein optischer Strahlteiler angeordnet, welcher zunächst von dem optischen Erhitzungssystem emittierte elektromagnetische Strahlung in zumindest zwei Teilstrahlen trennt und diese dann über optische Umleitelemente vorgebbar an unterschiedliche Stellen auf den Erhitzungskessel lenkbar sind. Ein derartiger Strahlteiler ermöglicht daher in besonders einfacher Art und Weise das teilweise Umlenken der elektromagnetischen Strahlung, hin zu unterschiedlichen, beispielsweise in der Hauptabstrahlrichtung sich gegenüberliegenden Stellen des Erhitzungskessels. Da eine Erwärmung der Schmutzflüssigkeit zunächst in der Nähe der Auftreffpunkte der elektromagnetischen Strahlung auf den Erhitzungskessel am größten ist, ergibt sich durch die Temperaturunterschiede während des Erwärmens innerhalb der Schmutzflüssigkeit eine Flüssigkeitszirkulation, welche eine Wärmeübertragung auf kühlere Bereiche der Schmutzflüssigkeit besonders einfach und effizient macht.

Gemäß zumindest einer Ausführungsform ist in einer Hauptabstrahlrichtung des optischen Erhitzungssystems zwischen dem optischen Erhitzungssystem und dem Erhitzungskessel zumindest eine Zerstreuungslinse angeordnet. Mittels der Zerstreuungslinse kann ein Strahlquerschnitt der elektromagnetischen Strahlung in seiner Querschnittfläche aufgeweitet werden und damit flächig auf den Erhitzungskessel treffen. Eine derartige möglichst großflächige Umformung des Erhitzungsstrahls durch die Zerstreuungslinse führt zu einer möglichst breitflächigen und homogenen Erwärmung der Kesselwand und damit ebenso der Schmutzflüssigkeit.

Gemäß zumindest einer Ausführungsform umfasst die Reinigungsvorrichtung zumindest ein elektrisches Erhitzungssystem zum Erhitzen der Schmutzflüssigkeit im Erhitzungsraum. Das elektrische Erhitzungssystem umfasst zumindest eine Leiteranordnung, wobei durch die Leiteranordnung elektrischer Strom durchleitbar ist. Wird die Leiteranordnung an eine Stromquelle angeschlossen, verursacht der durch die Leiteranordnung durchfließende Strom eine Erwärmung der Leiteranordnung selbst. Diese Wärme wird anschließend von der Leiteranordnung auf die Schmutzflüssigkeit übertragen. Eine derartige Anordnung aus Erhitzungssystem und Erhitzungskessel ist besonders platzsparend, da das elektrische Erhitzungssystem zumindest teilweise durch den Erhitzungskessel hindurchgeführt oder direkt an ihm befestigt ist. Darüber hinaus bildet ein derartiges elektrisches Erhitzungssystem eine kostengünstige Alternative zu dem bereits obig ausgeführten optischen Erhitzungssystem. Dabei kann die Reinigungsvorrichtung jedoch auch sowohl das optische Erhitzungssystem als auch das elektrische Erhitzungssystem umfassen. Eine derartige Lösung bietet die Möglichkeit, die sich jeweils beispielsweise ergänzenden Vorteile der jeweiligen Erhitzungssysteme gleichzeitig auszunutzen, um eine Erhitzung der Schmutzflüssigkeit besonders schnell und damit zeitsparend zu bewirken.

Gemäß zumindest einer Ausführungsform ist die Leiteranordnung mit zumindest einer Spule gebildet, welche innerhalb des Erhitzungsraums oder entlang einer Innen- und/oder Außenwandung des Erhitzungskessels geführt ist. Eine derartige Ausgestaltung der Leiteranordnung in Form der Spule bildet durch die der Spule innewohnende inhärente Induktivität die Möglichkeit, die von der Spule erzeugte Wärme möglichst gleichmäßig innerhalb des Erhitzungsraumes auf die Schmutzflüssigkeit zu übertragen.

Gemäß zumindest einer Ausführungsform ist die Leiteranordnung entlang von Seitenkanten des Erhitzungskessels geführt. Auch hierbei wird die Hitze möglichst gleichmäßig von der Leiteranordnung, welche mit Strom beaufschlagt ist, über die Kesselwand auf die Schmutzflüssigkeit übertragen. Die Leiteranordnung an den Seitenkanten kann ferner die Schmutzflüssigkeit möglichst effizient ausgehend von den Seitenkanten hin zum Inneren des Erhitzungsraumes gleichmäßig und homogen erhitzen.

Gemäß zumindest einer Ausführungsform weist der Erhitzungskessel eine zylindrische, kubische oder pyramidale Grundform auf. Gemäß den genannten Grundformen kann eine besonders effiziente, beispielsweise gleichmäßige Erwärmung der Schmutzflüssigkeit über die geometrische Grundbeschaffenheit des Erhitzungskessels selbst, individuell, eingestellt werden. Beispielsweise ermöglicht die pyramidale Grundform des Erhitzungskessels nach dem Einleiten der elektromagnetischen Strahlung über die Durchlassöffnung durch die Reflektionseigenschaften der Innenwandung des Erhitzungskessels und/oder durch an der Innenwandung angeordnete Spiegel eine besonders einfache Rückreflektionsfunktion innerhalb des Erhitzungsraumes, da durch die zu der Hauptabstrahlrichtung des optischen Erhitzungssystems schräg angewinkelten Seitenflächen dieser pyramidalen Grundform etwaige elektromagnetische Strahlung zunächst weg von der Durchlassöffnung in Richtung einer Bodenfläche des Erhitzungskessels gelenkt wird. Derartig schräg angewinkelte Seitenflächen können daher zu einer besonders schnellen, effizienten Verteilung der elektromagnetischen Strahlung innerhalb des Erhitzungsraumes führen.

Gemäß zumindest einer Ausführungsform ist ein aus der Schmutzflüssigkeit gewonnener, gasförmiger Reindampf aus einer Gasöffnung des Erhitzungskessels ausleitbar und in eine Säuberungseinheit einleitbar, wobei in der Säuberungseinheit der Reindampf auf zumindest 300°C erhitzbar ist und anschließend der Reindampf entlang eines Kühlweges kondensierbar ist. Mittels einer derartigen Anordnung ist ein besonders einfacher, kostengünstiger Weg einer direkten Gewinnung einer Reinflüssigkeit aus der in dem Erhitzungskessel erhitzten Schmutzflüssigkeit gewinnbar. Zudem sorgt die Säuberungseinheit vorteilhaft dafür, dass noch in dem aus dem Erhitzungskessel ausgeleiteten Reindampf befindliche beispielsweise pharmazeutische Nebenprodukte und/oder sonstige Verunreinigungen soweit erhitzt werden, dass diese durch das Erhitzen auf zumindest 300°C zerstört werden. Das heißt, dass der kondensierte Reindampf auch frei von derartigen zusätzlichen Verunreinigungen ist.

Es wird darüber hinaus ein Verfahren zur Herstellung einer Reinflüssigkeit aus einer Schmutzflüssigkeit angegeben. Das heißt, die für die hier beschriebene Reinigungsvorrichtung offenbarten Merkmale sind auch für das hier beschriebene Verfahren offenbart und umgekehrt.

In einem ersten Schritt wird eine Reinigungsvorrichtung gemäß zumindest einer der vorhergehenden Ausführungsformen bereitgestellt.

In einem nächsten Schritt wird die Reinigungsvorrichtung an einen Flüssigkeitskreislauf angeschlossen.

In einem weiteren Schritt wird die Reinigungsvorrichtung in Betrieb genommen. Mittels des hier beschriebenen Verfahrens zur Herstellung einer Reinflüssigkeit ist daher in besonders einfacher und effizienter Weise dargestellt, wie eine Reinflüssigkeit aus einer Schmutzflüssigkeit kostengünstig und zeitnah hergestellt werden kann.

Im Folgenden werden die hier beschriebene Reinigungsvorrichtung sowie das hier beschriebene Verfahren anhand von Ausführungsbeispielen und den dazugehörigen Figuren näher erläutert.

Die Figuren 2 und 3 zeigen in verschiedenen perspektivischen Ansichten einen grundlegenden Aufbau der hier beschriebenen Reinigungsvorrichtung.

Die Figuren 4A bis 4E zeigen die in den Figuren 1 und 2 dargestellte Reinigungsvorrichtung in verschiedenen Ventilstellungen jeweils in einer Drauf- oder Seitenansicht.

Die Figuren 5A bis 6F zeigen in schematischen Seitenansichten weitere Ausführungsbeispiele der hier beschriebenen Reinigungsvorrichtung.

Die Figuren 7A bis 7H zeigen die in den Figuren 2 bis 4E gezeigte Reinigungsvorrichtung während deren Betrieb.

Die Figur 8 zeigt in einer schematischen Seitenansicht ein weiteres Ausführungsbeispiel einer hier beschriebenen Reinigungsvorrichtung.

Die Figuren 9A bis 9C zeigen in schematischen Seitenansichten verschiedene Ausformungen eines hier beschriebenen Erhitzungskessels.

In den Ausführungsbeispielen und in den Figuren sind gleiche oder gleich wirkende Bestandteile jeweils mit den gleichen Bezugszeichen versehen. Die dargestellten Elemente sind nicht als maßstabsgerecht anzusehen, vielmehr können einzelne Elemente zum besseren Verständnis übertrieben groß dargestellt sein.

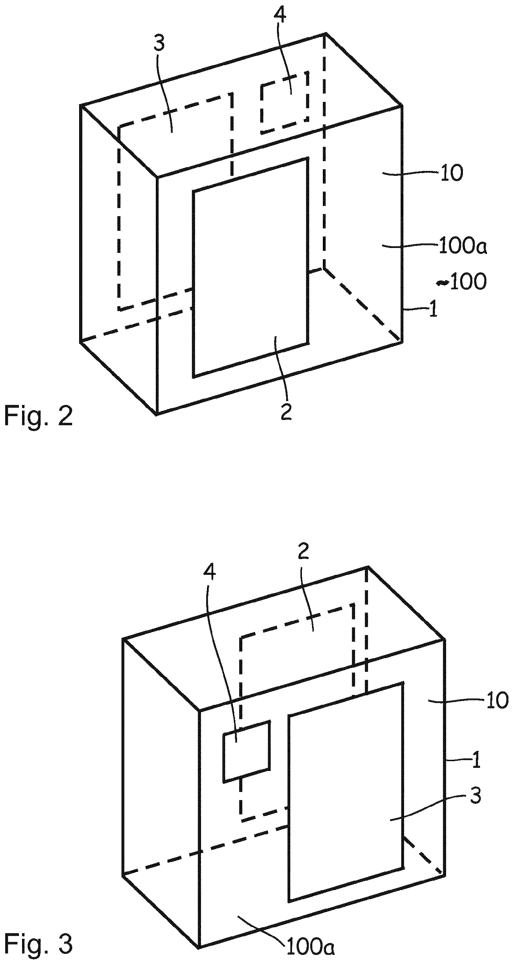

In der Figur 2 ist anhand einer schematisch perspektivischen Ansicht eine hier beschriebene Reinigungsvorrichtung 100 zum Reinigen von Schmutzflüssigkeit 100a (hier nicht gezeigt) angegeben. Die Reinigungsvorrichtung 100 umfasst einen Erhitzungskessel 1 zum Erhitzen der Schmutzflüssigkeit 100a. Dabei ist die Schmutzflüssigkeit 100a in einem Erhitzungsraum 10 des Erhitzungskessels 1 anordenbar. Zudem umfasst die Reinigungsvorrichtung 100 ein Einlassventil 2 zum Einfüllen der Schmutzflüssigkeit 100a, ein Auslassventil 3 zum Ausleiten der Schmutzflüssigkeit 100a aus dem Erhitzungskessel 1 sowie ein Gasüberdruckventil 4 zum Ausleiten von sich im Erhitzungsraum 10 befindlichem Gas. Der Erhitzungskessel 1 ist in Form eines Quaders ausgeführt, wobei an einer Längsfläche sowohl das Auslassventil 3 als auch das Gasüberdruckventil 4 angeordnet sind und an einer dieser Längsfläche gegenüberliegenden zweiten Längsfläche des Quaders das Einlassventil 2 angeordnet ist. Mit anderen Worten liegen sich das Einlassventil 2 einerseits sowie andererseits das Auslassventil 3 und das Gasüberdruckventil 4 gegenüber.

Die Figur 3 zeigt in einer weiteren schematisch perspektivischen Ansicht die in der Figur 2 gezeigte Reinigungsvorrichtung.

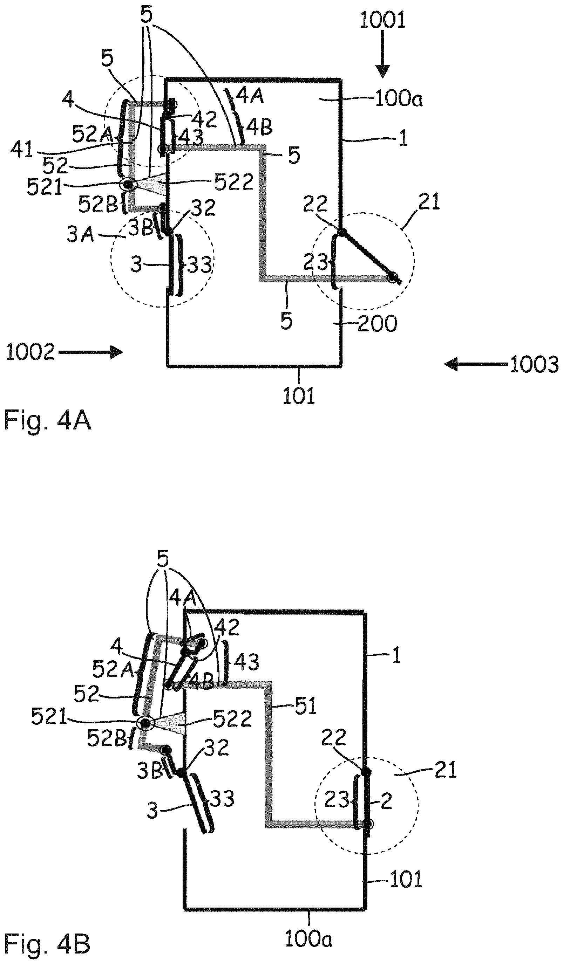

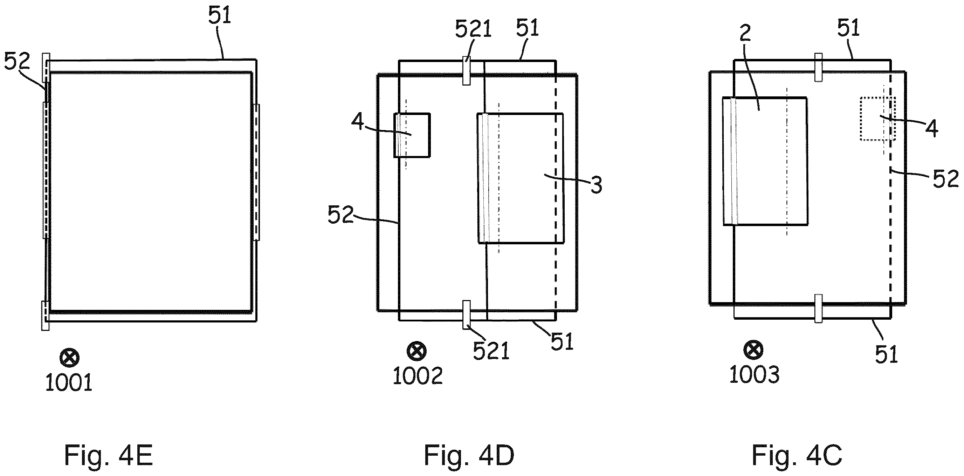

In der Figur 4A ist die in den Figuren 2 und 3 gezeigte Reinigungsvorrichtung 100 in einer schematischen Draufsicht gezeigt. Erkennbar ist, dass die Ventile 2, 3, 4 jeweils in einem Drehpunkt 22, 32, 42 drehbar an für die Ventile 2, 3, 4 vorgesehenen Öffnungen 23, 33, 43 am Erhitzungskessel 10 befestigt und gelagert sind. Vorliegend sind die Ventile 2, 3 und 4 in Form von schließbaren Klappen ausgebildet. Darüber hinaus ist aus der Figur 4A erkennbar, dass die Reinigungsvorrichtung 100 eine Ventilsteuereinheit 5 zum mechanischen Steuern der Ventile 2, 3, 4 umfasst, wobei die Ventilsteuereinheit 5 mit einer ersten Stangenvorrichtung 51 und einer zweiten Stangenvorrichtung 52 gebildet ist, welche jeweils entlang einer Außenwandung 101 des Erhitzungskessels 1 geführt sind. Die erste Stangenvorrichtung 51 verbindet, mit ihren beiden Enden, das Einlassventil 2 mit dem Gasüberdruckventil 4 mechanisch fest. Die zweite Stangenvorrichtung 52 verbindet das Gasüberdruckventil 4 und das Auslassventil 3, mit ihren beiden Enden, mechanisch miteinander fest. In der in Figur 4A gezeigten Ventilkonfiguration ist beispielsweise vor dem Erhitzen der Schmutzflüssigkeit 100a das Einlassventil 2 in einer Offen-Stellung 21 dargestellt. Mit anderen Worten kann in dieser Ventilkonfiguration Schmutzflüssigkeit 100a in den Erhitzungsraum 10 eingeleitet werden. Dies führt unmittelbar dazu, dass während des Befüllens, über die erste Stangenvorrichtung 51, welche andererseits wiederum mit dem zweiten Ende an einem zweiten Hebelende 4B, welches einem ersten Hebelende 4A des Gasüberdruckventils 4 gegenüberliegt, angeordnet ist, das Gasüberdruckventil 4 selbst geschlossen ist oder wird. Mit anderen Worten sind das Einlassventil 2 und das Gasüberdruckventil 4 über die erste Stangenvorrichtung 51 derart miteinander verrastet, dass in keinem Betriebszustand sowohl das Einlassventil 2 als auch das Gasüberdruckventil 4 geöffnet ist. Insofern sind das Gasüberdruckventil 4 und das Auslassventil 3 sind jeweils in Zu-Stellungen 31, 41.

Darüber hinaus ist aus der Figur 4A erkennbar, dass die zweite Stangenvorrichtung 52 drehbar um einen Drehpunkt 521 an einer Drehhalterung 522 angeordnet ist, wobei ein erstes Hebelende 52A der zweiten Stangenvorrichtung 52 mit dem ersten Hebelende 4A des Gasüberdruckventils 4 und ein zweites Hebelende 52B der zweiten Stangenvorrichtung 52 mit einem zweiten Hebelende 3B des Auslassventils 3 mechanisch fest miteinander verbunden ist. Dabei ist in der Figur 4A die Stangenvorrichtung 52 im Gleichgewicht, d.h. unausgelenkt, so dass sowohl das Auslassventil 3 als auch das Gasüberdruckventil 4 geschlossen sind. Die in der Figur 4A dargestellte Ventilkonfiguration kann daher als eine "Befüllphase" des Erhitzungskessels 1 angesehen werden.

In der Figur 4B ist eine von der Figur 4A unterschiedliche Ventilkonfiguration der Ventile 2, 3, 4 gezeigt. Im Unterschied zu der Figur 4A ist nun über eine Bewegung der ersten Stangenvorrichtung 51 in Richtung hin zu dem Auslassventil 3 und dem Gasüberdruckventil 4 das Einlassventil 2 geschlossen, während über die von der ersten Stangenvorrichtung 51 auf das Gasüberdruckventil 4 ausgeübten Hebelkraft das Gasüberdruckventil 4 geöffnet ist. Dadurch, dass die zweite Stangenvorrichtung 52 mit dem ersten Hebelende 4A des Gasüberdruckventils 4 einerseits und mit dem ersten Hebelende 3A des Auslassventils andererseits über den Drehpunkt 521 hebelartig verbunden ist, bewirkt eine Öffnung des Gasüberdruckventils 4 ebenso eine Öffnung des Auslassventils 3. Insofern sind sowohl die Stangenvorrichtungen 51, 52 als auch das Einlassventil 2 und das Gasüberdruckventil 4 über die Bewegung des Gasüberdruckventils 4 mechanisch miteinander verbunden und/oder verrastet.

In den Figuren 4C bis 4E ist die in den vorgenannten Figuren gezeigte Reinigungsvorrichtung 100 jeweils aus einer Richtung 1001, 1002 und 1003 gezeigt (siehe auch Figur 4A), aus der besonders deutlich sowohl die Ventile 2, 3, 4 als auch die an der Außenfläche 101 entlanggeführten Stangenvorrichtungen 51, 52 erkennbar sind. Zudem wird deutlich, dass in dem vorliegenden Ausführungsbeispiel das Gasüberdruckventil 4 über die erste Stangenvorrichtung 51 zweiarmig mit dem Einlassventil 2 verbunden ist (siehe insbesondere Figur 4E).

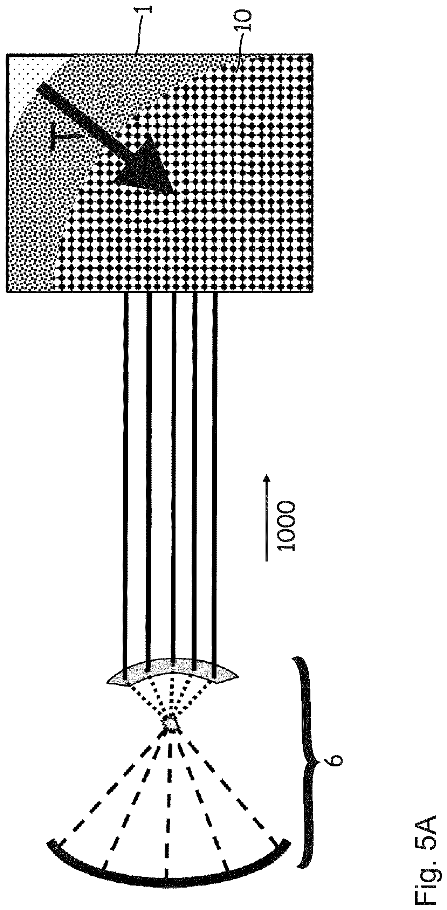

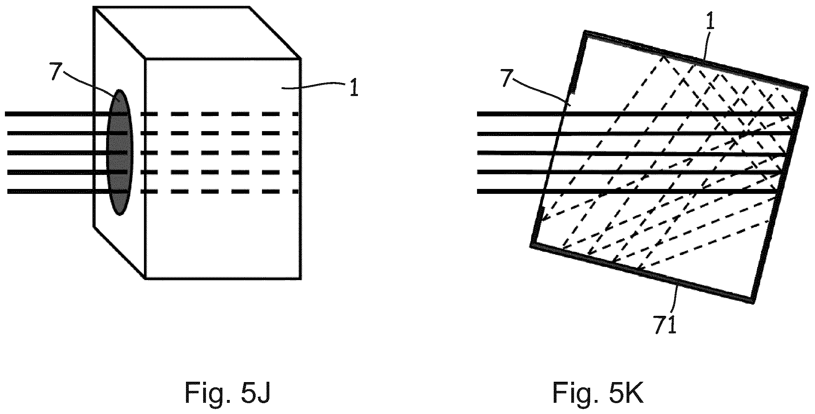

In der Figur 5A ist in einer schematischen Seitenansicht gezeigt, wie im Unterschied zu der Reinigungsvorrichtung 100 der Figuren 2 bis 4E, diese zusätzlich ein optisches Erhitzungssystem 6 zum Erhitzen der Schmutzflüssigkeit 100a im Erhitzungsraum 10 umfasst. Dabei ist das optische Erhitzungssystem 6 mit einer Punktlichtquelle gebildet, welche über einen Parabolspiegel und eine Sammellinse entlang einer Hauptabstrahlrichtung 1000 elektromagnetische Strahlung auf den Erhitzungskessel 1 lenkt. Ein derartiges System ist besonders einfach im Aufbau und kostengünstig herstellbar. Darüber hinaus ist der Energietransfer ausgehend von der Punktlichtquelle hin zu dem Erhitzungskessel 1 möglichst direkt. Dabei stellt die T-Pfeilrichtung eine Richtung steigender Temperatur in der Schmutzflüssigkeit 100a dar.

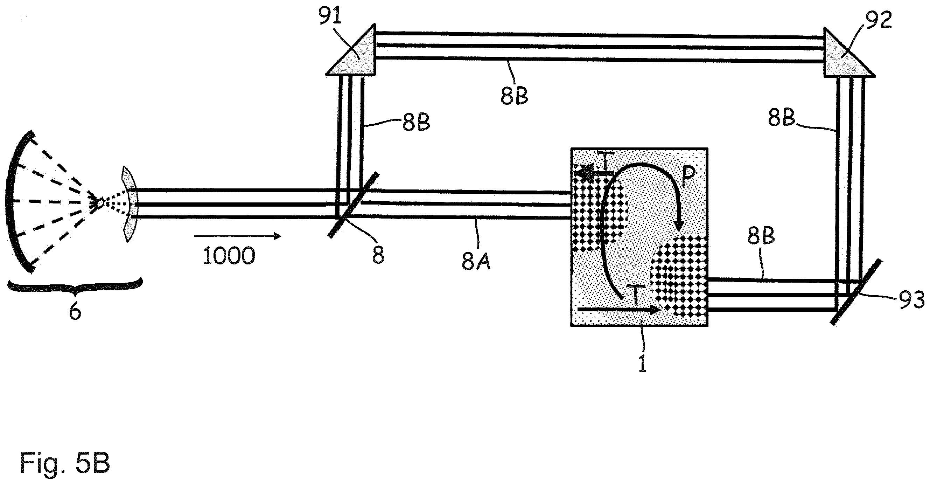

In der Figur 5B ist im Unterschied zu der Figur 5A gezeigt, wie die Reinigungsvorrichtung 100 zusätzlich einen optischen Strahlteiler 8 aufweist. Der optische Strahlteiler 8 ist in der Hauptabstrahlrichtung 1000 zwischen dem optischen Erhitzungssystem 6 und dem Erhitzungskessel 1 angeordnet. Dabei teilt der optische Strahlteiler 8 die auftreffende elektromagnetische Strahlung in zwei Teilstrahlen 8A und 8B auf, wobei der Teilstrahl 8A unabgelenkt durch den Strahlteiler 8 hindurchtritt und direkt und vorgebbar auf den Erhitzungskessel 1 trifft, während der Teilstrahl 8B über Umlenkprismen 91, 92 sowie einen Umlenkspiegel 93 auf eine dem optischen Erhitzungssystem 6 gegenüberliegende Außenfläche des Erhitzungskessels 1 auf diesen auftritt. Da nun zunächst die Erwärmung der Schmutzflüssigkeit 100a im Erhitzungskessel 1 in der Nähe der beiden Auftreffbereiche der elektromagnetischen Strahlung am höchsten ist, wird durch die Temperaturunterschiede im Erhitzungsraum 10 (durch die T-Pfeile dargestellt) vorteilhaft eine besonders wirkungsvolle Wärme- und/oder Flüssigkeitszirkulation innerhalb des Erhitzungsraumes 10 erzeugt, wodurch es zu einem besonders effizienten Energietransfer und damit Wärmeaustausch innerhalb der Schmutzflüssigkeit 100a kommt.

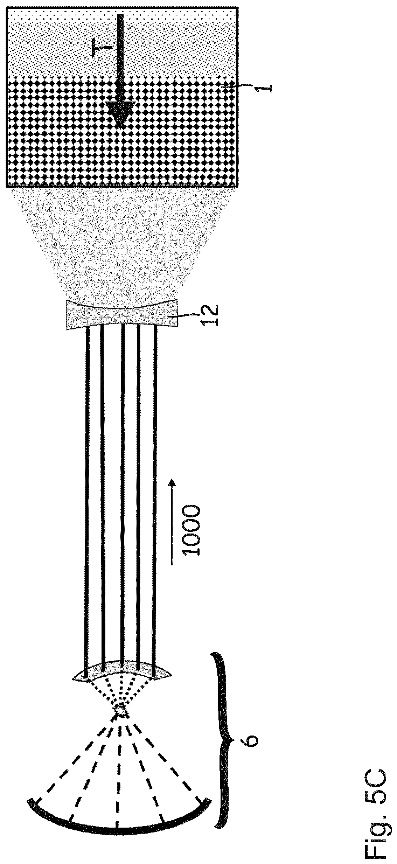

In der Figur 5C ist im Unterschied zu der Figur 5B anstatt des optischen Strahlteilers 8 eine Zerstreuungslinse 12 angeordnet, welche die elektromagnetische Strahlung, die parallel zur Hauptabstrahlrichtung 1000 verläuft, in ihrem Strahlungsquerschnitt aufweitet, so dass eine möglichst große Fläche des Erhitzungskessels 1 durch das Auftreffen der elektromagnetischen Strahlung erwärmt wird. Eine derartige Ausgestaltung der Reinigungsvorrichtung 100 umfassend die Zerstreuungslinse 12 ist besonders einfach in ihrem Aufbau und wirkungsvoll in Bezug auf einen direkten Energietransfer.

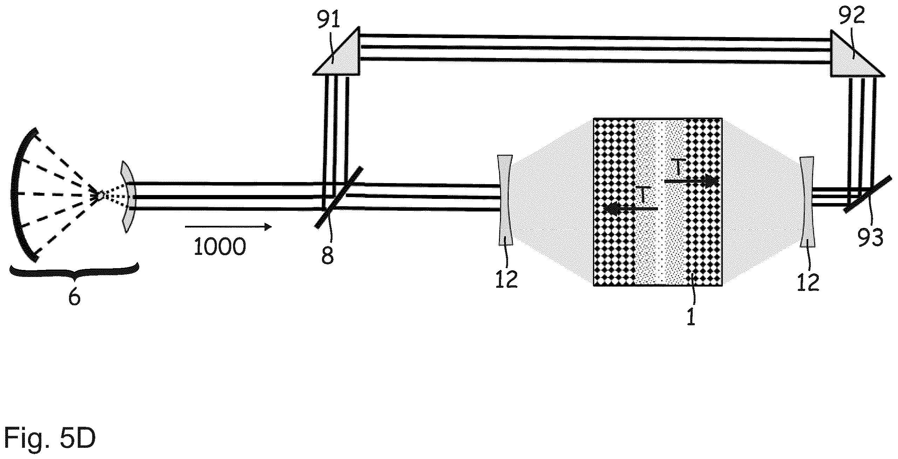

In der Figur 5D ist in einer schematischen Seitenansicht ein weiteres Ausführungsbeispiel, eine hier beschriebene Reinigungsvorrichtung 100 gezeigt. Im Unterschied zu dem Ausführungsbeispiel der Figur 5B ist in der Hauptabstrahlrichtung 1000 zwischen dem optischen Strahlteiler 8 und dem Erhitzungskessel 1 die Zerstreuungslinse 12 angeordnet. Zusätzlich ist in der Hauptabstrahlrichtung 1000 zwischen dem Erhitzungskessel 1 und dem Spiegel 93 eine weitere Zerstreuungslinse 12 angeordnet, so dass der Erhitzungskessel 1 beidseitig möglichst großflächig mit elektromagnetischer Strahlung bestrahlt wird, wodurch noch eine effizientere und homogenere Erwärmung der Schmutzflüssigkeit 100a realisiert ist.

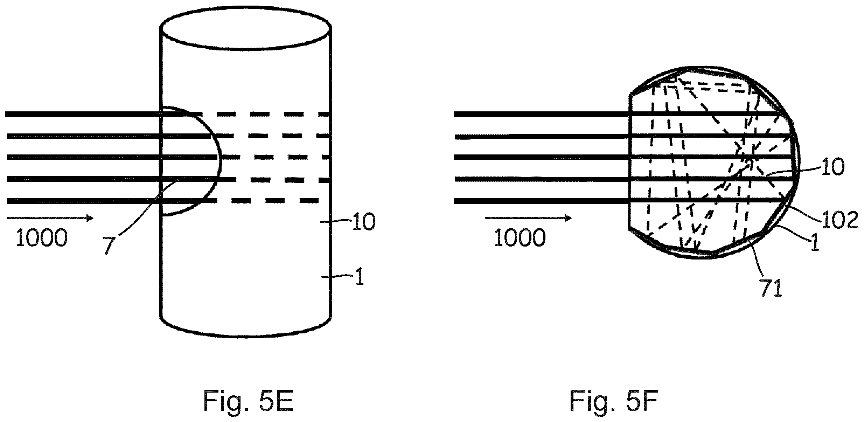

In den Figuren 5E und 5F ist ein weiteres Ausführungsbeispiel einer hier beschriebenen Reinigungsvorrichtung 100 gezeigt, in dem der Erhitzungskessel 1 eine zylindrische Grundform aufweist. Zudem ist in eine Kesselwand 11 ein strahlungsdurchlässiger Durchlassbereich 7 eingebracht, welcher vorliegend mit einem strahlungsdurchlässigen Glas gebildet ist. Erkennbar ist, dass die elektromagnetische Strahlung, beispielsweise erzeugt von einem der bereits obig beschriebenen optischen Erhitzungssysteme 6, durch den strahlungsdurchlässigen Durchlassbereich 7 hindurch in den Erhitzungsraum 10 geleitet wird. Ein derartiger Durchlassbereich 7 ermöglicht daher ein besonders zielgerichtetes Erwärmen der Schmutzflüssigkeit 100a.

In der Figur 5F ist die in der Figur 5E gezeigte Reinigungsvorrichtung 100 in einer schematischen Draufsicht gezeigt. Erkennbar ist, dass die über die Durchlassöffnung 7 in den Erhitzungsraum 10 eingeleitete elektromagnetische Strahlung auf an einer Innenwandung 102 des Erhitzungskessels 1 angeordnete strahlungsreflektierende Spiegel 71 trifft. Die Spiegel 71 können beispielsweise zur Vielfach-Reflektion geeignet sein und reflektieren die auftreffende, elektromagnetische Strahlung auf von dem Durchlassbereich 7 zumindest teilweise unterschiedliche Stellen. Insbesondere können die strahlungsreflektierenden Spiegel 71 derart ausgestaltet und/oder angeordnet sein, dass die auf sie auftreffende elektromagnetische Strahlung nicht wieder über den strahlungsdurchlässigen Durchlassbereich 7 aus dem Erhitzungsraum 10 heraus reflektiert wird. Mittels einer derartigen Anordnung der strahlungsreflektierenden Spiegel 71 ist eine besonders homogene Strahlungs- und/oder Energieverteilung innerhalb des Erhitzungsraumes 10 gegeben, wodurch die Schmutzflüssigkeit 100a möglichst gleichmäßig und gleichzeitig schnell erwärmt werden kann. Darüber hinaus ist die zylindrische Form insofern vorteilhaft, als dass diese sich innerhalb des Erhitzungsraumes 10 aufbauende Drücke besonders gleichmäßig, das heißt umfänglich, verteilt, so dass eine derartige Ausformung des Erhitzungskessels 1 besonders alterungsstabil ist. Darüber hinaus kann durch die umfängliche Kraftverteilung eine Wanddicke des Erhitzungskessels 1 besonders dünn ausgestaltet werden, was zu einer Materialersparnis in der Herstellung des Erhitzungskessels 1 führt.

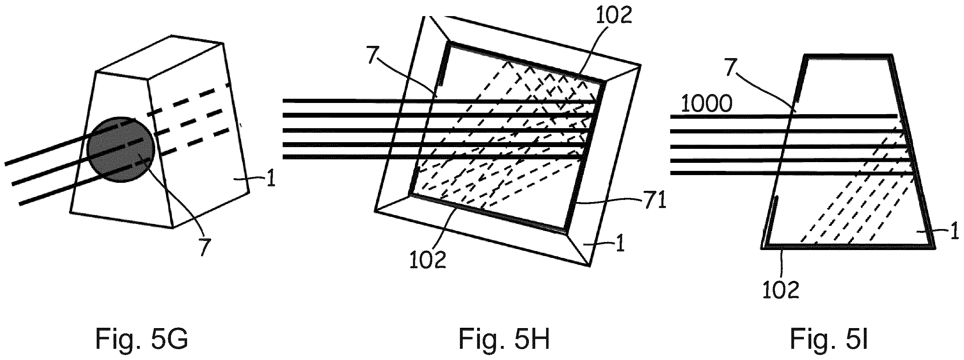

In der Figur 5G ist im Unterschied zu den Figuren 5E und 5F der Erhitzungskessel 1 in einer pyramidalen Grundform ausgestaltet. Vorliegend sind an der Innenwandung 102 wiederum strahlungsreflektierende Spiegel 71 angeordnet. Beispielsweise kann zu einer möglichst effizienten Gleichverteilung der elektromagnetischen Strahlung innerhalb des Erhitzungsraumes 10 der Erhitzungskessel 1 unabhängig von dem optischen Erhitzungssystem beispielsweise rotiert werden. Durch eine derartige Rotation trifft die elektromagnetische Strahlung, welche auch während der Rotation stets durch den Durchlassbereich 7 zumindest teilweise hindurchtritt, auf verschiedene Stellen innerhalb des Erhitzungsraumes 10 auf die Spiegel 71 und/oder auf die Schmutzflüssigkeit, so dass folglich auf möglichst viele Stellen der Innwandung 102 elektromagnetische Strahlung treffen kann.

Die Figur 5H zeigt die in der Figur 5G gezeigte Reinigungsvorrichtung 100 in einer schematischen Draufsicht.

In der Figur 5I ist weiter gezeigt, dass die parallel einfallende elektromagnetische Strahlung durch die schräg zur Hauptabstrahlrichtung 1000 verlaufenden Seitenflächen der pyramidalen Grundform des Erhitzungskessels 1 automatisch elektromagnetische Strahlung in Richtung einer Bodenfläche des Erhitzungskessels 1 reflektierten. Insofern sind besonders einfach "dreidimensionale" Innenreflektionen innerhalb des Erhitzungsraumes 10 realisiert. Eine derartige Ausgestaltung ist darüber hinaus einfach herstellbar sowie günstig in der Produktion.

In der Figur 5J ist die Reinigungsvorrichtung 100 in einer weiteren schematisch perspektivischen Ansicht gezeigt, bei der im Unterschied zu der Reinigungsvorrichtung 100 gemäß den Figuren 5G bis 5I der Erhitzungskessel 1 eine kubische Form aufweist. Auch eine derartige kubische Ausgestaltung des Erhitzungskessels 1 ist besonders kostengünstig und einfach im Aufbau.

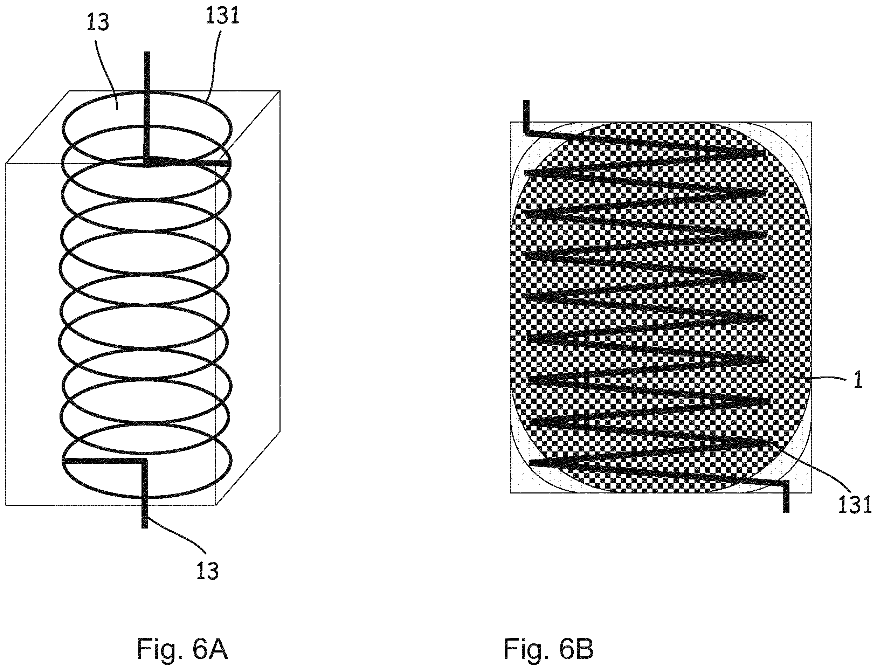

Der Figur 6A ist in einer weiteren, schematisch perspektivischen Ansicht ein weiteres Ausführungsbeispiel einer hier beschriebenen Reinigungsvorrichtung 100 entnehmbar. Im Unterschied zu der Reinigungsvorrichtung 100 beispielsweise der Figuren 5A bis 5K weist die Reinigungsvorrichtung 100 der Figur 6A anstatt des optischen Erhitzungssystems 6 ein elektrisches Erhitzungssystem 13 zum Erhitzen der Schmutzflüssigkeit 100a im Erhitzungsraum 10 auf. Dabei ist das elektrische Erhitzungssystem 13 mit einer Leiteranordnung 131 gebildet, wobei durch die Leiteranordnung 131 elektrischer Strom durchleitbar ist. Vorliegend ist die Leiteranordnung 131 mit einer Spule gebildet, welche innerhalb und durch den Erhitzungsraum 10 hindurch verläuft. Nach Beaufschlagung der Spule mit einem Strom erwärmt sich die Spule durch deren Induktivität, wobei die erzeugte Wärme anschließend an die Schmutzflüssigkeit 100a abgegeben wird. Eine derartige Erwärmung ist daher besonders homogen und darüber hinaus wegen des Verzichts auf ein optisches Erhitzungssystems aufgrund der Tatsache, dass das elektrische Erhitzungssystem 13 in den Erhitzungskessel "integriert ist", besonders platzsparend.

In der Figur 6B ist schematisch eine Wärmeverteilung im Betrieb der in der Figur 6A gezeigten Reinigungsvorrichtung 100 gezeigt. Erkennbar ist, dass die Wärme sich besonders effizient und gleichmäßig über den gesamten Erhitzungsraum 10 verteilt. Grundsätzlich bietet das elektrische Erhitzungssystem 13 eine besonders betriebsstabile und gefährdungsarme Möglichkeit des Erwärmens.

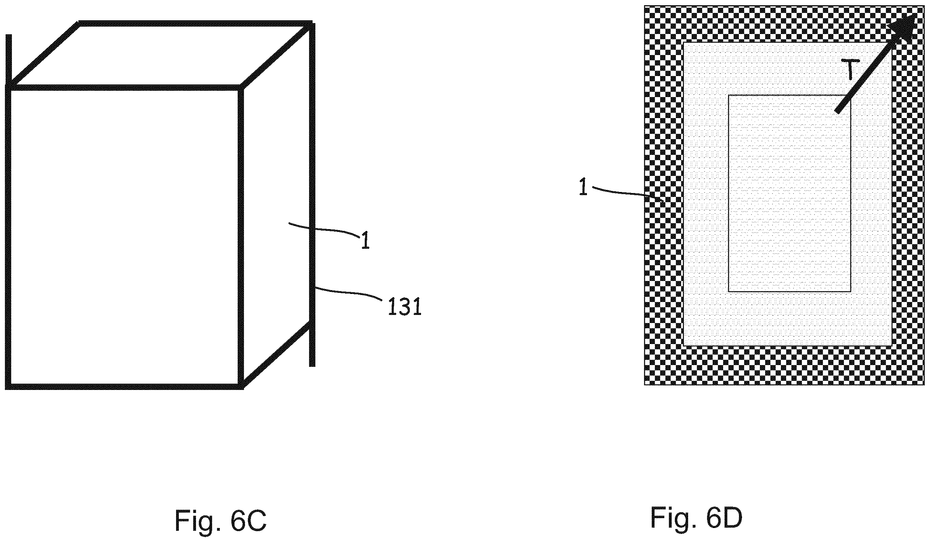

In der Figur 6C ist in einer schematisch perspektivischen Ansicht ein weiteres Ausführungsbeispiel einer hier beschriebenen Reinigungsvorrichtung 100 gezeigt, bei dem im Unterschied zu den Figuren 6A und 6B anstatt der Spule die Leiteranordnung 131 entlang von Seitenkanten des Erhitzungskessels 1 geführt ist. Ausgehend von den Seitenkanten wird bei Beaufschlagung der Leiteranordnung 131 mit elektrischem Strom die Hitze von der Leiteranordnung 131 an die Schmutzflüssigkeit 100a gleichmäßig übertragen (in Richtung des T-Pfeil zunehmende Temperatur, siehe Figur 6D). Auch eine derartige Anordnung ist besonders platzsparend und energieeffizient.

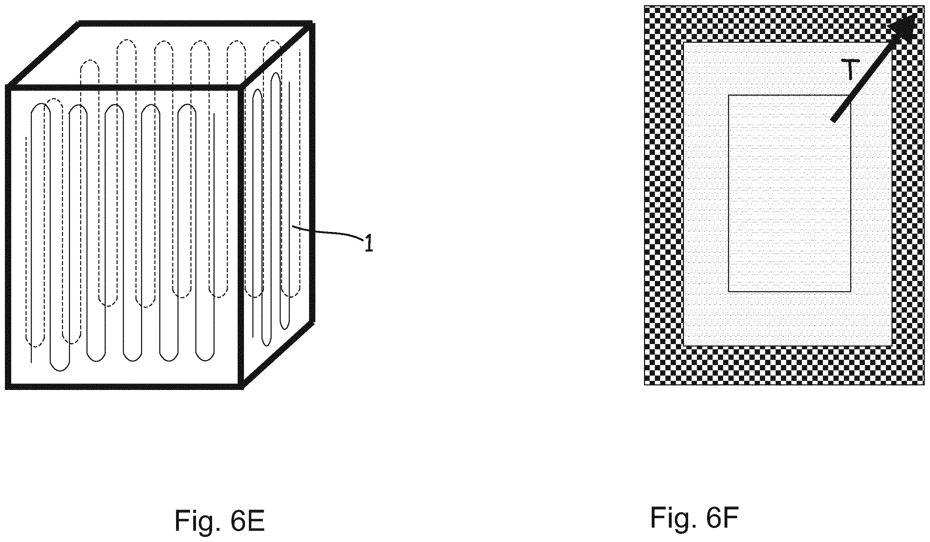

In der Figur 6E ist in einer schematisch perspektivischen Ansicht ein weiteres Ausführungsbeispiel einer hier beschriebenen Reinigungsvorrichtung 100 gezeigt, bei dem im Unterschied zu dem Ausführungsbeispiel der Reinigungsvorrichtung 100 gemäß den Figuren 6A bis 6D die Leiteranordnung 131 entlang von Seitenflächen des kubischen Erhitzungskessels 1 geführt ist.

In der Figur 6F ist leicht erkennbar, dass hierbei, ausgehend von den Seitenflächen, die Wärmeenergie flächig auf die Schmutzflüssigkeit 100a übertragen wird.

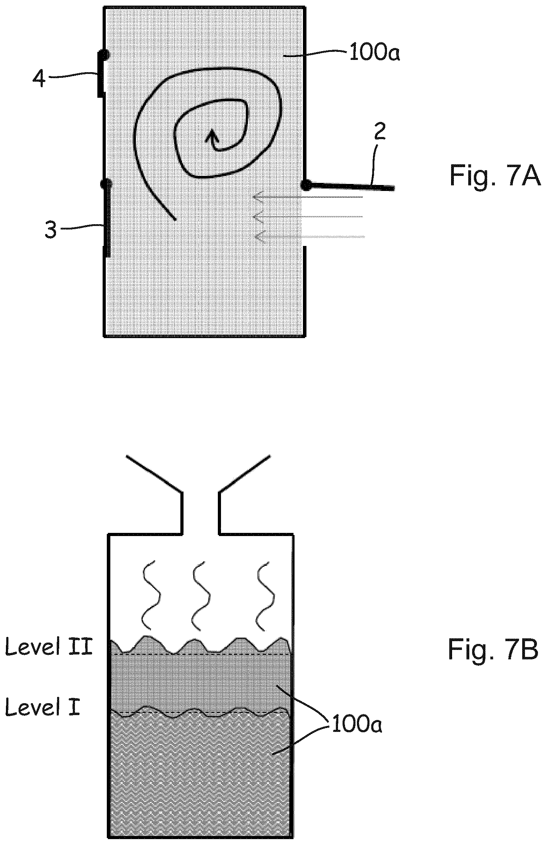

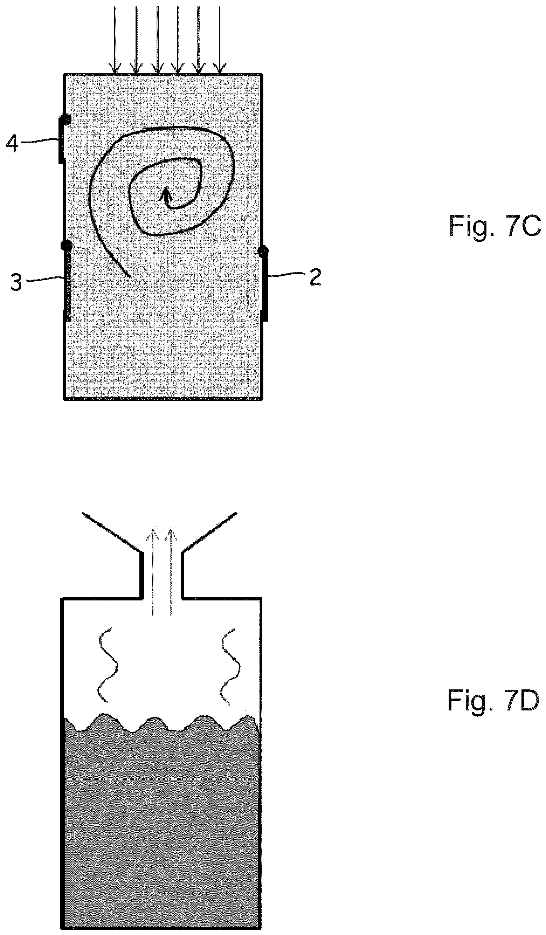

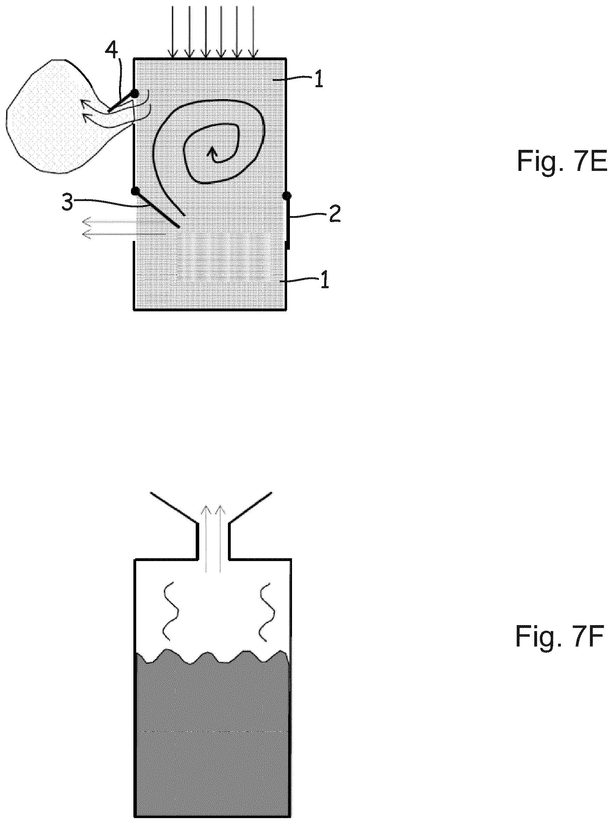

In der Figur 7A ist ein Funktionsprinzip der in den Figuren 2 bis 4E gezeigten Reinigungsvorrichtung 100 gezeigt. Insbesondere ist aus der Figur 7A erkennbar, dass das Einlassventil 2 zunächst zum Befüllen des Erhitzungsraumes 10 mit der Schmutzflüssigkeit 100a geöffnet ist, während das Auslassventil 3 und das Gasüberdruckventil 4 geschlossen sind.

Eine Seitenansicht ist in der Figur 7B gezeigt. Dabei bleibt das Einlassventil 2 so lange offen, bis sich ein Grenzdruck von einer Atmosphäre innerhalb des Erhitzungsraumes 10 einstellt. Ist dieser Grenzdruck überschritten, öffnet sich das Gasüberdruckventil 4 zur Druckverringerung und das Einlassventil 2 schließt sich gleichzeitig. Mit anderen Worten wird der Erhitzungskessel 1 zu einer Füllhöhe von einem Level I zu einem Level II so lange befüllt, bis sich der Grenzdruck einstellt.

In den Figuren 7C (Draufsicht) und 7D (Seitenansicht) ist gezeigt, wie in einem nächsten Schritt am Erhitzungskessel 1 nach Ausbildung des Grenzgasdrucks alle Ventile geschlossen sind oder werden. Während des Erhitzens sind das Einlassventil 2, das Auslassventil 3 sowie das Gasüberdruckventil 4 geschlossen.

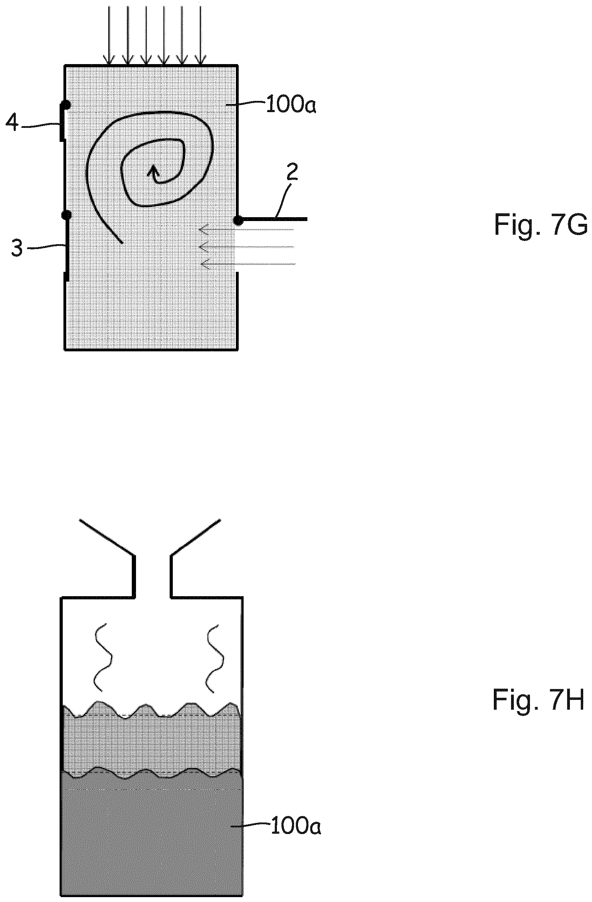

In den Figuren 7E (Draufsicht) und 7F ist dargestellt, dass bei einem weiteren Erwärmen der Schmutzflüssigkeit 100a der Druck innerhalb des Erhitzungskessels 1 über eine Atmosphäre steigt, was die Ventilsteuereinheit 5 dazu veranlasst, das Einlassventil 2 geschlossen zu halten und zur Druckverringerung sowohl das Auslassventil 3 als auch das Gasüberdruckventil 4 zu öffnen. Ist nun der Gasdruck innerhalb des Erhitzungskessels 1 anschließend unter eine Atmosphäre wieder gefallen, werden die Ventile 3 und 4 durch die Ventilsteuereinheit 5 wieder geschlossen. Gleichzeitig, zur Erhöhung des Druckes, wird wiederum durch eine Öffnung des Einlassventils 2, Schmutzflüssigkeit 100a in den Erhitzungskessel 1 eingeleitet (siehe Figuren 7G und 7H) solange bis der Gasdruck wieder eine Atmosphäre übersteigt. Mit anderen Worten pendelt der Gasdruck innerhalb des Erhitzungskessels 1 während dessen Betrieb um den Grenzgasdruck von einer Atmosphäre

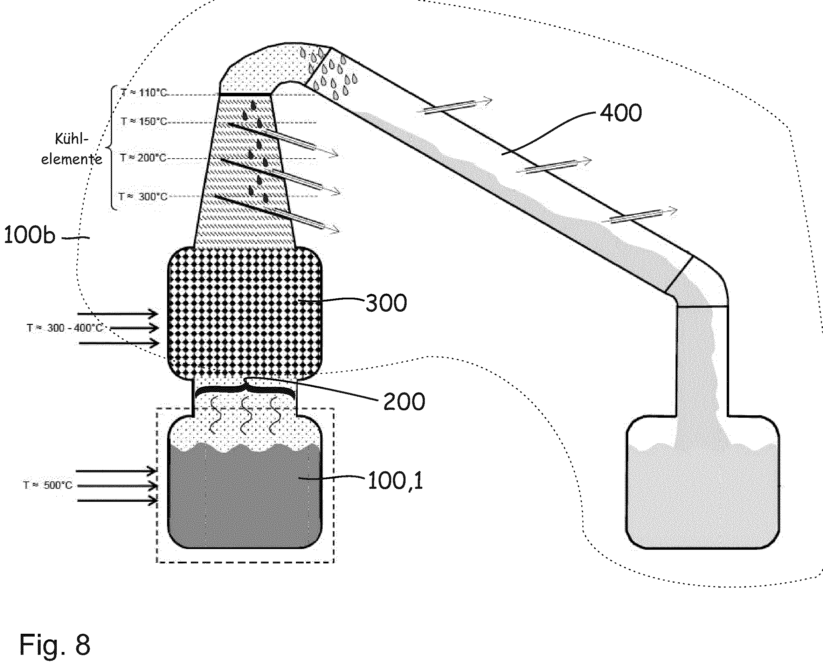

In der Figur 8 ist in einer schematisch perspektivischen Seitenansicht ein weiteres Ausführungsbeispiel der hier beschriebenen Reinigungsvorrichtung 100 gezeigt, bei dem an einer Gasöffnung 200 des Erhitzungskessels 1 eine Säuberungseinheit 300 angeschlossen ist, durch welche der innerhalb des Erhitzungskessels 1 gebildete Reindampf einleitbar ist. Der Reindampf wird innerhalb der Säuberungseinheit 300 auf eine Temperatur von wenigstens 300°C erwärmt, wodurch sich eventuell noch innerhalb des Reindampfes befindliche Verschmutzungsbestandteile, beispielsweise pharmazeutische Nebenprodukte, zerstört und/oder verbrannt werden. Danach kann der Reindampf nach Durchlaufen der Säuberungseinheit 300 und eines Kühlweges 400 zu einer gereinigten Flüssigkeit kondensieren. In der Figur 8 ist gereinigtes Wasser erhalten, welches eine Temperatur von beispielsweise wenigstens 70°C und höchstens 90°C aufweist. Insofern kann das gereinigte Wasser sogleich, das heißt ohne weitere Abkühlschritte, für andere Zwecke beispielsweise zur weiteren Aufbereitung oder zum weiteren Abfüllen verwendet werden. Mit anderen Worten bildet die Erhitzungskessel zusammen mit der Säuberungseinheit 300 und dem Kühlweg 400 einen Flüssigkeitskreislauf 100b aus. Eine derartige Reinigungsvorrichtung 100 ist daher besonders kompakt und effizient im Aufbau, was es ermöglicht, die Reinigungsvorrichtung 100 besonders kostengünstig herzustellen.

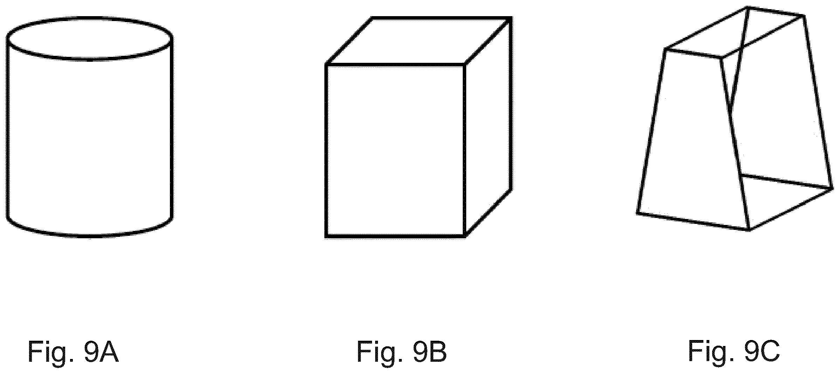

Die Figuren 9A bis 9C zeigen in schematischen Seitenansichten in Erhitzungskessel 1 in zylindrischer Form (siehe Figur 9A), kubischer Form (siehe Figur 9B) sowie in pyramidaler Form (siehe Figur 9C), wobei die einzelnen Formen die jeweils bereits obig beschriebenen Vorteile aufweisen.

**Bezugszeichenliste**

| I | Level I |
|---|---|
| II | Level II |
| 1 | Erhitzungskessel |
| 2 | Einlassventil |
| 3 | Auslassventil |
| 3B | zweites Hebelende |
| 4 | Gasüberdruckventil |
| 4A | erstes Hebelende |
| 5 | Ventilsteuereinheit |
| 6 | optisches Erhitzungssystem |
| 7 | Durchlassbereich |
| 8 | Strahlteiler |
| 8A | Teilstrahl |
| 8B | Teilstrahl |
| 10 | Erhitzungsraum |
| 11 | Kesselwand |
| 12 | Zerstreuungslinse |
| 13 | elektrisches Erhitzungssystem |
| 21 | Offen-Stellung des Einlassventils 2 |
| 22 | Drehpunkt |
| 23 | Öffnungen |
| 31 | Zu-Stellung des Auslassventils 3 |
| 32 | Drehpunkt |
| 33 | Öffnungen |
| 41 | Zu-Stellung des Gasüberdruckventils 4 |
| 42 | Drehpunkt, erstes Hebelende |
| 43 | Öffnungen, zweites Hebelende |
| 51 | erste Stangenvorrichtung |
| 52 | zweite Stangenvorrichtung |
| 52A | erstes Hebelende |
| 52B | zweites Hebelende |
| 71 | strahlungsreflektierender Spiegel |
| 91 | Umlenkprisma |
| 92 | Umlenkprisma |
| 93 | Umlenkspiegel |
| 100 | Reinigungsvorrichtung |
| 100a | Schmutzflüssigkeit |
| 100b | Flüssigkeitskreislauf |
| 101 | Außenwandung, Außenfläche |
| 102 | Innenwandung |
| 131 | Leiteranordnung |
| 200 | Grenzgasdruck |

| | |
|---|---|
| 300 | Säuberungseinheit |
| 400 | Kühlweg |
| 521 | Drehpunkt |
| 522 | Drehhalterung |
| 1000 | Hauptabstrahlrichtung |
| 1001 | Richtung |
| 1002 | Richtung |
| 1003 | Richtung |

**Patentansprüche**

1. Verfahren zur Herstellung einer Reinflüssigkeit aus einer Schmutzflüssigkeit (100a), mit den folgenden Schritten:

   - Bereitstellen einer Reinigungsvorrichtung (100) umfassend die folgenden Merkmale:

     ◦ einen Erhitzungskessel (1) zum Erhitzen der Schmutzflüssigkeit (100a),
     ◦ zumindest ein Einlassventil (2) zum Einfüllen der Schmutzflüssigkeit (100a) in einen Erhitzungsraum (10) des Erhitzungskessels (1),
     ◦ zumindest ein Auslassventil (3),
     ◦ zumindest ein Gasüberdruckventil (4) zum Ausleiten von sich im Erhitzungsraum (10) befindlichem Gas, und

   zumindest eine Ventilsteuereinheit (5), zum mechanischen Steuern der Ventile (2, 3, 4), wobei das Einlassventil (2), das Auslassventil (3) zum Ausleiten der Schmutzflüssigkeit (100a) aus dem Erhitzungskessel (1) und das Gasüberdruckventil (4) über die Ventilsteuereinheit (5) mechanisch miteinander in Eingriff stehen, - Anschließen der Reinigungsvorrichtung (100) an einen Flüssigkeitskreislauf (100b);

   - Anschließende Inbetriebnahme der Reinigungsvorrichtung (100) wobei ein Betrieb der Reinigungsvorrichtung (100) wie folgt von statten geht:

     ◦ Im Betrieb des Erhitzungskessels (1) wird während eines Erwärmens der Schmutzflüssigkeit (100a),
     ◦ bis zu einem durch die Ventilsteuereinheit (5) vorgegebenen Grenzgasdruck (200), von zumindest einer Atmosphäre innerhalb des Erhitzungsraums (10), durch die Ventilsteuereinheit (5) das Einlassventil (2) in einer Offen-Stellung (21) und das Auslassventil (3) und das Gasüberdruckventil (4) in jeweils einer Zu-Stellung (31, 41) betrieben, nach Überschreiten des Grenzgasdrucks (200) wird das Einlassventil (2) durch die Ventilsteuereinheit (5) geschlossen und das Auslassventil (3) und das Gasüberdruckventil (4) werden durch die Ventilsteuereinheit (5) geöffnet, wobei bei einem zeitlich auf das Überschreiten folgenden Unterschreiten des Grenzgasdrucks (200) das Auslassventil (3) und das Gasüberdruckventil (4) durch die Ventilsteuereinheit (5) wieder geschlossen werden und das Einlassventil (2) wieder geöffnet wird, wobei
     ◦ die Ventile (2, 3, 4) jeweils in einem Drehpunkt (22, 32. 42) drehbar an für die Ventile (2, 3, 4) vorgesehenen Öffnungen (23, 33, 43) im Erhitzungskessel (10) gelagert sind, die Ventilsteuereinheit (5) mit einer ersten Stangenvorrichtung (51) und einer zweiten Stangenvorrichtung (52) gebildet ist, welche jeweils entlang einer Außenwandung (101) des Erhitzungskessels (1) geführt sind, und wobei die erste Stangenvorrichtung (51) das Einlassventil (2) mit dem Gasüberdruckventil (4) mechanisch fest verbindet, die zweite Stangenvorrichtung (52) das Gasüberdruckventil (4) und das Auslassventil (3) mechanisch fest miteinander verbindet.

2. Reinigungsvorrichtung (100) zum Erwärmen und Reinigen von Schmutzflüssigkeit (100a), umfassend einen Erhitzungskessel (1) zum Erhitzen der Schmutzflüssigkeit (100a), zumindest ein Einlassventil (2) zum Einfüllen der Schmutzflüssigkeit (100a) in einen Erhitzungsraum (10) des Erhitzungskessels (1), zumindest ein Auslassventil (3), zumindest eine Ventilsteuereinheit (5),
   **gekennzeichnet, durch**
   zumindest ein Gasüberdruckventil (4) zum Ausleiten von sich im Erhitzungsraum (10) befindlichem Gas, und die zumindest eine Ventilsteuereinheit (5) zum mechanischen Steuern der Ventile (2, 3, 4), wobei
   das Einlassventil (2), das Auslassventil (3) zum Ausleiten der Schmutzflüssigkeit (100a) aus dem Erhitzungskessel (1) und das Gasüberdruckventil (4) über die Ventilsteuereinheit (5) mechanisch derart miteinander in Eingriff stehen, dass im Betrieb des Erhitzungskessels (1), während eines Erwärmens der Schmutzflüssigkeit (100a),

bis zu einem **durch** die Ventilsteuereinheit (5) vorgebbaren Grenzgasdruck (200), von zumindest einer Atmosphäre innerhalb des Erhitzungsraums (10), **durch** die Ventilsteuereinheit (5) das Einlassventil (2) in einer Offen-Stellung (21) und das Auslassventil (3) und das Gasüberdruckventil (4) in jeweils einer Zu-Stellung (31, 41) betreibbar sind, nach Überschreiten des Grenzgasdrucks (200) das Einlassventil (2) **durch** die Ventilsteuereinheit (5) schließbar und das Auslassventil (3) und das Gasüberdruckventil (4) **durch** die Ventilsteuereinheit (5) öffenbar ist, und bei einem zeitlich auf das Überschreiten folgenden Unterschreiten des Grenzgasdrucks (200) das Auslassventil (3) und das Gasüberdruckventil (4) **durch** die Ventilsteuereinheit (5) wieder schließbar und das Einlassventil (2) wieder öffenbar ist, wobei die Ventile (2, 3, 4) jeweils in einem Drehpunkt (22, 32. 42) drehbar an für die Ventile (2, 3, 4) vorgesehenen Öffnungen (23, 33, 43) im Erhitzungskessel (10) gelagert sind, die Ventilsteuereinheit (5) mit einer ersten Stangenvorrichtung (51) und einer zweiten Stangenvorrichtung (52) gebildet ist, welche jeweils entlang einer Außenwandung (101) des Erhitzungskessels (1) geführt sind, und wobei die erste Stangenvorrichtung (51) das Einlassventil (2) mit dem Gasüberdruckventil (4) mechanisch fest verbindet, die zweite Stangenvorrichtung (52) das Gasüberdruckventil (4) und das Auslassventil (3) mechanisch fest miteinander verbindet.

3. Reinigungsvorrichtung nach Anspruch 2,
**dadurch gekennzeichnet, dass**
die zweite Stangenvorrichtung (52) drehbar um einen Drehpunkt (521) an einer Drehhalterung (522) angeordnet ist, wobei ein erstes Hebelende (52A) der zweiten Stangenvorrichtung (52) mit einem ersten Hebelende (4A) des Gasüberdruckventils (4) und ein zweites Hebelende (52B) der zweiten Stangenvorrichtung (52) mit dem einem zweiten Hebelende (3B) des Auslassventils (3) mechanisch fest verbunden ist, wobei durch eine Hebelbewegung der zweiten Stangenvorrichtung (52) sowohl das Gasüberdruckventil (4) als auch das Auslassventil (3) öffenbar sind.

4. Reinigungsvorrichtung nach Anspruch 3,
**dadurch gekennzeichnet, dass**
die erste Stangenvorrichtung (51) an einem dem ersten Hebelende (4A) des Gasüberdruckventils (4) gegenüberliegenden zweiten Hebelende (4B) des Gasüberdruckventils (4B) mit diesem mechanisch fest verbunden ist.

5. Reinigungsvorrichtung nach einem der vorhergehenden Ansprüche 2 bis 4,
**dadurch gekennzeichnet, dass**
zumindest ein optisches Erhitzungssystem (6) zum Erhitzen der Schmutzflüssigkeit (100a) im Erhitzungsraum (10) vorgesehen ist, wobei über das optische Erhitzungssystem (6) elektromagnetische Strahlung vorgebbar auf den Erhitzungskessel (1) richtbar ist.

6. Reinigungsvorrichtung nach Anspruch 5,
**dadurch gekennzeichnet, dass**
die von dem optischen Erhitzungssystem (6) emittierbare elektromagnetische Strahlung über zumindest einen strahlungsdurchlässigen Durchlassbereich (7), welcher in eine Kesselwand (11) der Erhitzungskessels (1) eingebracht ist, in den Erhitzungsraum (10) einleitbar ist.

7. Reinigungsvorrichtung nach Anspruch 5 oder 6,
**dadurch gekennzeichnet, dass**
das optische Erhitzungssystem (6) zumindest einen strahlungsreflektierenden Spiegel (71) umfasst, welcher innerhalb des Erhitzungsraums an einer Innenwandung (102) des Erhitzungskessels (1) angeordnet ist.

8. Reinigungsvorrichtung nach zumindest einem der Ansprüche 6 bis 7,
**dadurch gekennzeichnet, dass**
in einer Hauptabstrahlrichtung (1000) des optischen Erhitzungssystems (7) zwischen dem optischen Erhitzungssystem (7) und dem Erhitzungskessel (1) zumindest ein optischer Strahlteiler (8) angeordnet ist, welcher zunächst von dem optischen Erhitzungssystem (7) emittierte elektromagnetische Strahlung in zumindest zwei Teilstrahlen (8A, 8B) trennt, und diese dann über optische Umleitelemente (91, 92, 93) vorgebbar an unterschiedliche Stellen auf den Erhitzungskessel (1) lenkbar sind.

9. Reinigungsvorrichtung nach zumindest einem der Ansprüche 6 bis 8,
**dadurch gekennzeichnet, dass**
in einer Hauptabstrahlrichtung (1000) des optischen Erhitzungssystems (7) zwischen dem optischen Erhitzungssystem (7) und dem Erhitzungskessel (1) zumindest eine Zerstreuungslinse (12) angeordnet ist.

10. Reinigungsvorrichtung nach einem der vorhergehenden Ansprüche 2 bis 9,

**dadurch gekennzeichnet, dass**
zumindest ein elektrisches Erhitzungssystem (13) zum Erhitzen der Schmutzflüssigkeit (100a) im Erhitzungsraum (10) vorgesehen ist, umfassend zumindest eine Leiteranordnung (131), wobei durch die Leiteranordnung (131) elektrischer Strom durchleitbar ist.

11. Reinigungsvorrichtung nach dem vorhergehenden Anspruch,
    **dadurch gekennzeichnet, dass**
    die Leiteranordnung (131) mit zumindest einer Spule gebildet ist, welche innerhalb des Erhitzungsraums (10) oder entlang einer Innen- (102) und/oder Außenwandung (101) des Erhitzungskessels (1) geführt ist.

12. Reinigungsvorrichtung nach dem vorhergehenden Anspruch 10 oder 11,
    **dadurch gekennzeichnet, dass**
    die Leiteranordnung (131) entlang von Seitenkanten des Erhitzungskessels geführt ist.

13. Reinigungsvorrichtung nach einem der vorhergehenden Ansprüche 2 bis 12,
    **dadurch gekennzeichnet, dass**
    der Erhitzungskessel (1) eine zylindrische, kubische oder pyramidale Grundform aufweist.

14. Reinigungsvorrichtung nach einem der vorhergehenden Ansprüche 2 bis 13,
    **dadurch gekennzeichnet, dass**
    ein aus der Schmutzflüssigkeit (100a) gewonnener, gasförmiger Reindampf aus einer Gasöffnung (200) des Erhitzungskessels (1) ausleitbar und in eine Säuberungseinheit (300) einleitbar ist, wobei in der Säuberungseinheit (300) der Reindampf auf zumindest 300 Grad Celsius erhitzbar ist, und anschließend der Reindampf entlang eines Kühlweges (400) kondensierbar ist.

**Claims**

1. Method for producing a purified liquid from a contaminated liquid (100a), comprising the following steps:

   - providing a purification device (100) comprising the following features:

     • a heating vessel (1) for heating the contaminated liquid (100a),
     • at least one inlet valve (2) for filling the contaminated liquid (100a) into a heating chamber (10) of the heating vessel (1),
     • at least one outlet valve (3),
     • at least one gas overpressure valve (4) for discharging gas located in the heating chamber (10), and

   at least one valve control unit (5) for mechanically controlling the valves (2, 3, 4), wherein the inlet valve (2), the outlet valve (3) for discharging the contaminated liquid (100a) from the heating vessel (1), and the gas overpressure valve (4) are mechanically engaged with one another via the valve control unit (5);

   - connecting the purification device (100) to a fluid circuit (100b);
   - subsequently starting up the purification device (100), wherein the purification device (100) is operated as follows:

     • during operation of the heating vessel (1), while the contaminated liquid (100a) is heated,
     • up to a limit gas pressure (200) of at least one atmosphere within the heating chamber (10), which pressure is specified by the valve control unit (5), the inlet valve (2) is operated in an open position (21) and the outlet valve (3) and the gas overpressure valve (4) are each operated in a closed position (31, 41) by the valve control unit (5); once the limit gas pressure (200) has been exceeded, the inlet valve (2) is closed by the valve control unit (5) and the outlet valve (3) and the gas overpressure valve (4) are opened by the valve control unit (5), wherein the outlet valve (3) and the gas overpressure valve (4) are re-closed by the valve control unit (5) and the inlet valve (2) is reopened if the gas pressure falls below the limit gas pressure (200) after having exceeded it, wherein
     • the valves (2, 3, 4) are each mounted in one fulcrum (22, 32, 42), respectively, so as to be rotatable at openings (23, 33, 43) in the heating vessel (10) which are provided for the valves (2, 3, 4); the valve control unit (5) is formed by a first rod device (51) and a second rod device (52) which are each guided along an outer wall (101) of the heating vessel (1), and wherein the first rod device (51) mechanically rigidly connects the inlet valve (2) to the gas overpressure valve (4) and the second rod device (52) mechanically rigidly interconnects the gas overpressure valve (4) and the outlet valve (3).

2.  Purification device (100) for heating and purifying contaminated liquid (100a), comprising a heating vessel (1) for heating the contaminated liquid (100a), at least one inlet valve (2) for filling the contaminated liquid (100a) into a heating chamber (10) of the heating vessel (1), at least one outlet valve (3) and at least one valve control unit (5),
    **characterised by**
    at least one gas overpressure valve (4) for discharging gas located in the heating chamber (10), and the at least one valve control unit (5) for mechanically controlling the valves (2, 3, 4),
    the inlet valve (2), the outlet valve (3) for discharging the contaminated liquid (100a) from the heating vessel (1), and the gas overpressure valve (4) being mechanically engaged with one another via the valve control unit (5) such that, during operation of the heating vessel (1), while the contaminated liquid (100a) is being heated,
    up to a limit gas pressure (200) of at least one atmosphere within the heating chamber (10), which pressure is specified by the valve control unit (5), the inlet valve (2) can be operated in an open position (21) and the outlet valve (3) and the gas overpressure valve (4) can each be operated in a closed position (31, 41) by the valve control unit (5);
    once the limit gas pressure (200) has been exceeded, the inlet valve (2) can be closed by the valve control unit (5) and the outlet valve (3) and the gas overpressure valve (4) can be opened by the valve control unit (5), and
    the outlet valve (3) and the gas overpressure valve (4) can be re-closed by the valve control unit (5) and the inlet valve (2) can be reopened if the gas pressure falls below the limit gas pressure (200) after having exceeded it, the valves (2, 3, 4) each being mounted in one fulcrum (22, 32, 42), respectively, so as to be rotatable at openings (23, 33, 43) in the heating vessel (10) which are provided for the valves (2, 3, 4), the valve control unit (5) being formed by a first rod device (51) and a second rod device (52) which are each guided along an outer wall (101) of the heating vessel (1), and the first rod device (51) mechanically rigidly connecting the inlet valve (2) to the gas overpressure valve (4) and the second rod device (52) mechanically rigidly interconnecting the gas overpressure valve (4) and the outlet valve (3).

3.  Purification device according to claim 2,
    **characterised in that**
    the second rod device (52) is arranged on a pivot mounting (522) so as to rotate about a fulcrum (521), a first lever end (52A) of the second rod device (52) being mechanically rigidly connected to a first lever end (4A) of the gas overpressure valve (4), and a second lever end (52B) of the second rod device (52) being mechanically rigidly connected to a second lever end (3B) of the outlet valve (3), it being possible to open both the gas overpressure valve (4) and the outlet valve (3) by means of a lever movement of the second rod device (52).

4.  Purification device according to claim 3,
    **characterised in that**
    the first rod device (51) is mechanically rigidly connected to the gas overpressure valve (4B) at a second lever end (4B) thereof which is opposite the first lever end (4A) of the gas overpressure valve (4).

5.  Purification device according to any of the preceding claims 2 to 4,
    **characterised in that**
    at least one optical heating system (6) is provided for heating the contaminated liquid (100a) in the heating chamber (10), it being possible to specifically direct electromagnetic radiation towards the heating vessel (1) by means of the optical heating system (6).

6.  Purification device according to claim 5,
    **characterised in that**
    the electromagnetic radiation which can be emitted by the optical heating system (6) can be introduced into the heating chamber (10) via at least one radiation-permeable passage region (7) which is formed in a vessel wall (11) of the heating vessel (1).

7.  Purification device according to either claim 5 or claim 6,
    **characterised in that**
    the optical heating system (6) comprises at least one radiation-reflecting mirror (71) which is arranged within the heating chamber on an inner wall (102) of the heating vessel (1).

**8.** Purification device according to at least one of claims 6 to 7, **characterised in that** at least one optical beam splitter (8) is arranged in a main beam direction (1000) of the optical heating system (7) between the optical heating system (7) and the heating vessel (1), which splitter initially separates electromagnetic radiation emitted by the optical heating system (7) into at least two partial beams (8A, 8B) which can then be specifically directed onto different points on the heating vessel (1) by means of optical deflection elements (91, 92, 93).

**9.** Purification device according to at least one of claims 6 to 8, **characterised in that** at least one dispersion lens (12) is arranged in a main beam direction (1000) of the optical heating system (7) between the optical heating system (7) and the heating vessel (1).

**10.** Purification device according to any of the preceding claims 2 to 9, **characterised in that** at least one electrical heating system (13) is provided for heating the contaminated liquid (100a) in the heating chamber (10), which heating system comprises at least one conductor arrangement (131), it being possible for electric current to pass through the conductor arrangement (131).

**11.** Purification device according to the preceding claim, **characterised in that** the conductor arrangement (131) is formed having at least one coil which is guided inside the heating chamber (10) or along an inner (102) and/or outer wall (101) of the heating vessel (1).

**12.** Purification device according to either of the preceding claims 10 or 11, **characterised in that** the conductor arrangement (131) is guided along lateral edges of the heating vessel.

**13.** Purification device according to any of the preceding claims 2 to 12, **characterised in that** the heating vessel (1) has a cylindrical, cubic or pyramidal basic shape.

**14.** Purification device according to any of the preceding claims 2 to 13, **characterised in that** a gaseous pure steam obtained from the contaminated liquid (100a) can be discharged from a gas opening (200) of the heating vessel (1) and introduced into a cleansing unit (300), it being possible for the pure steam to be heated to at least 300 degrees Celsius in the cleansing unit (300) and then for the pure steam to be condensed along a cooling path (400).

**Revendications**

**1.** Procédé de fabrication d'un liquide pur à partir d'un liquide contaminé (100a), comprenant les étapes suivantes :

- mise à disposition d'un dispositif de nettoyage (100) présentant les caractéristiques suivantes :

• une chaudière de chauffage (1) pour le chauffage du liquide contaminé (100a),
• au moins une soupape d'entrée (2) pour l'introduction du liquide contaminé (100a) dans un espace de chauffage (10) de la chaudière de chauffage (1),
• au moins une soupape de sortie (3),
• au moins une soupape de surpression de gaz (4) pour l'évacuation du gaz se trouvant dans l'espace de chauffage (10) et

au moins une unité de commande de soupapes (5) pour la commande mécanique des soupapes (2, 3, 4), la soupape d'entrée (2), la soupape de sortie (3) pour l'évacuation du liquide contaminé (100a) hors de la chaudière de chauffage (1) et la soupape de surpression (4) étant reliées mécaniquement entre elles par l'intermédiaire de l'unité de commande de soupapes (5)

- raccordement du dispositif de nettoyage (100) à un circuit de liquide (100b) ;

- mise en service du dispositif de nettoyage (100)

un fonctionnement du dispositif de nettoyage (100) ayant lieu comme suit :

• lors du fonctionnement de la chaudière de chauffage (1), pendant le chauffage du liquide contaminé (100a), • jusqu'à une pression de gaz limite (200) prédéterminée par l'unité de commande de soupapes (5), à partir d'au moins une atmosphère à l'intérieur de l'espace de chauffage (10), par l'unité de commande de soupapes (5), la soupape d'entrée (2) est mise dans une position ouverte (21) et la soupape de sortie (3) et la soupape de surpression de gaz (4) sont mises chacune dans une position fermée (31, 41), après le dépassement de la pression de gaz limite (200), la soupape d'entrée (2) est fermée par l'unité de commande de soupapes (5) et la soupape de sortie (3) et la soupape de surpression de gaz (4) sont ouvertes par l'unité de commande de soupapes (5), moyennant quoi, lors d'un passage en dessous de la pression de gaz limite (200), ayant lieu après le dépassement, la soupape de sortie (3) et la soupape de surpression de gaz (4) sont refermées par l'unité de commande de soupapes (5) et la soupape d'entrée (2) est rouverte,
• les soupapes (2, 3, 4) sont logées chacun dans un centre de rotation (22, 32, 42) de manière rotative au niveau d'ouvertures (23, 33, 43) prévues pour les soupapes (2, 3, 4) dans la chaudière de chauffage (10), l'unité de commande de soupapes (5) est constituée d'un premier dispositif à tiges (51) et d'un deuxième dispositif à tiges (52), qui sont guidés chacun le long d'une paroi externe (101) de la chaudière de chauffage (1) et le premier dispositif à tiges (51) reliant mécaniquement de manière ferme la soupape d'entrée (2) avec la soupape de surpression de gaz (4), le deuxième dispositif à tiges (52) reliant entre eux, mécaniquement de manière ferme la soupape de surpression de gaz (4) et la soupape de sortie (3).

2. Dispositif de nettoyage (100) pour le chauffage et le nettoyage d'un liquide contaminé (100a), comprenant une chaudière de chauffage (1) pour le chauffage du liquide contaminé (100a), au moins une soupape d'entrée (2) pour l'introduction du liquide contaminé (100a) dans un espace de chauffage (10) de la chaudière de chauffage (1), au moins une soupape de sortie (3), au moins une unité de commande de soupapes (5),
**caractérisé par**
au moins une soupape de surpression de gaz (4) pour l'évacuation d'un gaz se trouvant dans un espace de chauffage (10) et l'au moins une unité de commande de soupapes (5) pour la commande mécanique (2, 3, 4),
la soupape d'entrée (2), la soupape de sortie (3) pour l'évacuation du liquide contaminé (100a) hors de la chaudière de chauffage (1) et la soupape de surpression de gaz (4) étant reliées mécaniquement par l'intermédiaire de l'unité de commande de soupapes (5), de façon à ce que, lors du fonctionnement de la chaudière de chauffage (1), pendant un chauffage du liquide contaminé (100a),
jusqu'à une pression de gaz limite (200), pouvant être prédéterminée, par l'unité de commande de soupapes (5), à partir d'au moins une atmosphère à l'intérieur de l'espace de chauffage (10), par l'unité de commande de soupapes (5), la soupape d'entrée (2) est mise dans une position ouverte (21) et la soupape de sortie (3) et la soupape de surpression de gaz (4) peuvent être mises chacune dans une position fermée (31, 41),
après le dépassement de la pression de gaz limite (200), la soupape d'entrée (2) peut être fermée par l'unité de commande de soupapes (5) et la soupape de sortie (3) et la soupape de surpression de gaz (4) peuvent être ouvertes par l'unité de commande de soupapes (5) et
lors d'un passage en dessous de la pression de gaz limite (200), suivant un dépassement, la soupape de sortie (3) et la soupape de surpression de gaz (4) peuvent être refermées et la soupape d'entrée (2) peut être rouverte, les soupapes (2, 3, 4) étant logées chacune de manière rotative dans un centre de rotation (22, 32, 42) au niveau d'ouvertures (23, 33, 43) prévues pour les soupapes (2, 3, 4), dans la chaudière de chauffage (10), l'unité de commande de soupapes (5) étant constituée d'un premier dispositif à tiges (51) et d'un deuxième dispositif à tiges (52), qui sont guidés chacun le long d'une paroi externe (101) de la chaudière de chauffage (1) et le premier dispositif à tiges (51) reliant mécaniquement de manière ferme la soupape d'entrée (2) avec la soupape de surpression de gaz (4), le deuxième dispositif à tiges (52) reliant entre eux mécaniquement de manière ferme la soupape de surpression de gaz (4) et la soupape de sortie (3).

3. Dispositif de nettoyage selon la revendication 2,
**caractérisé en ce que**
le deuxième dispositif à tiges (52) est disposé de manière rotative autour d'un centre de rotation (521) au niveau d'un support de rotation (522), une première extrémité de levier (52A) du deuxième dispositif à tiges (52) étant reliée mécaniquement de manière ferme avec une première extrémité de levier (4A) de la soupape de surpression de gaz (4) et une deuxième extrémité de levier (52B) du deuxième dispositif à tiges (52) étant reliée mécaniquement de manière ferme avec une deuxième extrémité de levier (3B) de la soupape de sortie (3), la soupape de surpression de gaz (4) ainsi que la soupape de sortie (3) pouvant être ouvertes grâce à un mouvement de levier du deuxième dispositif à tiges (52).

**4.** Dispositif de nettoyage selon la revendication 3,
**caractérisé en ce que**
le premier dispositif à tiges (51) est relié mécaniquement de manière ferme, au niveau d'une deuxième extrémité de levier (4B), de la soupape à surpression de gaz (4B), opposée à la première extrémité de levier (4A) de la soupape de surpression de gaz (4).

**5.** Dispositif de nettoyage selon l'une des revendications 2 à 4,
**caractérisé en ce que**
au moins un système de chauffage optique (6) est prévu pour le chauffage du liquide contaminé (100a) dans l'espace de chauffage (10), le système de chauffage optique (6) permettant d'émettre un rayonnement électromagnétique de manière prédéterminée en direction de la chaudière de chauffage (1).

**6.** Dispositif de nettoyage selon la revendication 5,
**caractérisé en ce que**
le rayonnement électromagnétique pouvant être émis par le système de chauffage optique (6) peut être introduit dans l'espace de chauffage (10) par l'intermédiaire d'au moins une zone de passage (7), transparente au rayonnement, qui est intégrée dans une paroi (11) de la chaudière de chauffage (1).

**7.** Dispositif de nettoyage selon la revendication 5 ou 6,
**caractérisé en ce que**
le système de chauffage optique (6) comprend au moins un miroir réfléchissant le rayonnement (71) qui se trouve à l'intérieur de l'espace de chauffage au niveau d'une paroi interne (102) de la chaudière de chauffage (1).

**8.** Dispositif de nettoyage selon au moins l'une des revendications 6 à 7,
**caractérisé en ce que**
dans une direction d'émission principale (1000) du système de chauffage optique (7), entre le système de chauffage optique (7) et la chaudière de chauffage (1), se trouve au moins un diviseur de rayons (8) qui sépare d'abord le rayonnement électromagnétique émis par le système de chauffage optique (7) en au moins deux rayons partiels (8A, 8B) puis ceux-ci peuvent être orientés, par l'intermédiaire d'éléments de déviation optique (91, 92, 93), de manière prédéterminée, vers différents endroits sur la chaudière de chauffage (1).

**9.** Dispositif de nettoyage selon au moins l'une des revendications 6 à 8,
**caractérisé en ce que**
dans une direction d'émission principale (1000) du système de chauffage optique (7), entre le système de chauffage optique (7) et la chaudière de chauffage (1), se trouve au moins une lentille de diffusion (12).

**10.** Dispositif de nettoyage selon au moins l'une des revendications 2 à 9,
**caractérisé en ce que**
au moins un système de chauffage électrique (13) est prévu pour le chauffage du liquide contaminé (100a) dans l'espace de chauffage (10), comprenant au moins une disposition de conducteurs (131), un courant électrique pouvant s'écouler dans la disposition de conducteurs (131).

**11.** Dispositif de nettoyage selon la revendication précédente,
**caractérisé en ce que**
la disposition de conducteurs (131) est constituée d'au moins une bobine, qui est guidée à l'intérieur de l'espace de chauffage (10) ou le long d'une paroi interne (102) et/ou externe (101) de la chaudière de chauffage (1).

**12.** Dispositif de nettoyage selon au moins l'une des revendications 10 ou 11,
**caractérisé en ce que**
la disposition de conducteurs (131) est guidée le long d'arêtes latérales de la chaudière de chauffage (1).

**13.** Dispositif de nettoyage selon au moins l'une des revendications 2 à 12,
**caractérisé en ce que**
la chaudière de chauffage (1) présente une forme cylindrique, cubique ou pyramidale.

**14.** Dispositif de nettoyage selon au moins l'une des revendications 2 à 13,

**caractérisé en ce que**

une vapeur pure, extraite du liquide contaminé (100a), peut être évacuée par une ouverture de gaz (200) de la chaudière de chauffage (1) et peut être introduite dans une unité de nettoyage (300), la vapeur pure pouvant être chauffée à au moins 300 degrés Celsius dans la l'unité de nettoyage (300) puis la vapeur pure peut être condensée le long d'un trajet de refroidissement (400).

**Phasenübergangs-Diagramm für Wasser**

Fig. 1

Fig. 2

Fig. 3

Fig. 4A

Fig. 4B

Fig. 4E　　　　Fig. 4D　　　　Fig. 4C

Fig. 5A

Fig. 5B

EP 2 732 828 B1

Fig. 5C

Fig. 5D

Fig. 5E

Fig. 5F

EP 2 732 828 B1

Fig. 5I

Fig. 5H

Fig. 5G

Fig. 5K

Fig. 5J

Fig. 6B

Fig. 6A

Fig. 6D

Fig. 6C

Fig. 6F

Fig. 6E

4

3

100a

2

Fig. 7A

Level II

Level I

100a

Fig. 7B

Fig. 7C

Fig. 7D

Fig. 7E

Fig. 7F

Fig. 7G

Fig. 7H

Fig. 8

Fig. 9C

Fig. 9B

Fig. 9A

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 678743 A